# EUROPEAN PATENT SPECIFICATION

(11) **EP 1 537 977 B1**
(45) Date of publication and mention of the grant of the patent: **21.11.2018**
(21) Application number: 03771461.5
(22) Date of filing: 31.07.2003
(51) Int. Cl.: B29C 51/08, B32B 27/30, B65D 53/00, C08L 51/04, B29K 25/00, B29K 55/02, B29L 31/56

(54) **RESIN SHEET FOR COLD FORMING AND COLD FORMED ARTICLE**
HARZFOLIE ZUM KALTFORMEN
FEUILLE DE RESINE POUR FORMAGE A FROID ET ARTICLE FORME A FROID

(30) Priority: 31.07.2002 JP 2002222268; 31.07.2002 JP 2002222269; 31.07.2002 JP 2002222280; 31.07.2002 JP 2002222281; 31.07.2002 JP 2002222282; 31.07.2002 JP 2002222283; 31.07.2002 JP 2002222284
(43) Date of publication of application: 08.06.2005
(73) Proprietor: Shikoku Kakoki Co., Ltd., Itano-gun, Tokushima-ken 771-0202 (JP); Kabushiki Kaisha Yakult Honsha, Tokyo 105-8660 (JP)
(72) Inventor: ISHIMOTO, Mikio, Tokyo 150-0001 (JP); KANAI, Masaharu, Tokyo 150-0001 (JP); WATANABE, Toshiro, Tokyo 150-0001 (JP); SHINOHARA, Mitsuhiko, Itano-gun, Tokushima 771-0202 (JP); MIKI, Yoshifumi, Itano-gun, Tokushima 771-0202 (JP)
(74) Representative: Nederlandsch Octrooibureau
(86) International application number: PCT/JP2003/009757
(87) International publication number: WO 2004/011230

(56) References cited:
- WO-A1-94/12551
- JP-A- 09 100 377
- JP-A- 57 063 344
- JP-A- 2003 165 566
- JP-A- 2003 226 349
- JP-A- 2003 267 422
- JP-B2- 51 005 862
- US-A- 3 582 456
- US-A- 4 071 598
- US-A- 4 312 802
- US-B1- 6 380 305

## Description

### Technical Field

The present invention relates to a resin sheet for cold forming; a cold formed product and a method for manufacturing thereof; a sealed container and a method for manufacturing thereof. In more detail, it relates to a resin sheet for cold forming to obtain a secondary formed product having a shape retaining property by cold forming; a cold formed product manufactured with using the resin sheet for cold forming and a method for manufacturing thereof; a sealed container comprising a cap having an impact resistance property and the shape retaining property manufactured with using the resin sheets for cold forming and a method for manufacturing thereof.

### Background Art

Conventionally, as a food container such as a beverage container, a yogurt container, a portion container, a cup noodle container, and as a synthetic resin container filled with disposable medical supplies and the like, so-called General Purpose Polystyrene (GPPS)-based resin such as styrene homopolymer being excellent in tensile strength, heat resistance, light stability, formability and surface luster, and High Impact Polystyrene (HIPS) which is improved the brittleness by blending rubber such as SBR and BR to GPPS, are often used. As a cap material to put together and seal to an opening of this polystyrene-based resin container, an aluminum laminated body wherein an aluminum foil is used as a base material, and sealant layer and the like are provided on the surface thereof to adhere to the container, is used. A small piece of aluminum cap material being blanked out into an extensive form of the cap from these aluminum laminated bodies is formed into a shape with skirt by folding back its end. The aluminum cap being sealed to the opening of the container has an excellent sealing property, a peel resistant property and excellent stability at the time of peeling. When being fed to the opening of the container, less adhesion is caused by static electricity, and feedability of sheet is good, thus, it is commonly used. Moreover, the aluminum cap has so-called shape retaining property which is a property to maintain a folded and deformed shape when a skirt being formed by folding back its peripheral part is provided. Therefore, when drinking a filled contents directly from the container, the state wherein the part contacting a mouth in the vicinity of the opening of the container is covered with the end of the cap is retained, an area in the vicinity of the opening of the container can be prevented from getting dirty, and it is excellent in hygiene and appearance, thus, it is preferably used.

However, recently troubles that a foreign matter is mixed into processed food containers occur frequently, and the safety measure has to be taken. As it is impossible to use a metal detector for the container using the above-mentioned aluminum cap, there is a problem that metals being possibly mixed into the container such as a nail, a staple, a broken piece of punching blade of the formed product, a bolt and a nut, a wire, and a spring, can not be detected. Moreover, in the containers having these aluminum caps, as aluminum caps and synthetic resin container bodies such as polystyrene need to be separated respectively when collecting garbage, it has a defect of being inferior in recycling efficiency.

As an alternative for this conventional aluminum cap, a cap wherein a whole is made of plastic is proposed. For example, a cap material wherein it is manufactured by blanking a laminated material provided with a sealant layer on the lower face of a laminated base material laminated a heat-resistant film on both sides of a base material of a co-extruded film provided with a coat layer constituting of high-density polyethylene on both sides of a central layer constituting of high-density polyethylene and polypropylene-based polymer into a given shape, is proposed (See Japanese Laid-Open Patent Application No. 1999-10810). However, these plastic caps are adhered to the ends of the containers, and the outer circumference of the adhesive surface is not folded back but becomes a flat form extended directly from the adhesive surface. When drinking the filled contents directly from the container, there is a hygiene problem. Moreover, when the containers are manufactured from polystyrene-based resins such as GPPS and HIPS, materials of the cap and the container body are different. Therefore, it is necessary to separate the cap from the container at the time of disposal.

On the other hand, in an apparatus to fill the liquid such as a beverage into such containers, when trouble occurs in a line of forming and filling sealing steps, if the cap of the container is formed by heating the resin sheet for forming, an inconvenience is caused as all the resin sheets for forming piled up in a heating zone have to be disposed. To avoid being such heating state, separate means to shunt a heating apparatus is necessary. Furthermore, when driving the apparatus , it needs some time for temperature rise to a certain degree, and the loss of container material sheets and time is inevitable.

In the manufacturing of aluminum caps, aluminum foil material is formed by being sandwiched with male and female dies at room temperature without heating, that is, so-called cold forming. The formed aluminum cap has the shape retaining property to retain a deformed shape. However, in case of a plastic cap, when the stress is added, the change of molecular conformation is strongly subject to the thermodynamic behavior, therefore, there is a strong tendency to restore shape in press forming at the temperature lower than a glass transition point. Thus, at the time of demolding immediately after forming process, elasticity is restored and the forming accuracy can not be obtained, which is combined with change over time after the process, make it impossible to obtain a plastic cap having the shape retaining property to retain the state wherein the end part is folded back faithfully to the shape of die by cold forming at a temperature lower than a glass transition point. Moreover, to obtain the shape retaining property of the cap by cold-forming, some attempts to use a thick sheet, or a hard material as the cap material have been conducted. However, it not only prevents from obtaining the cap having satisfactory shape retaining property, but also causes an inconvenience that the peeling property of top cap becomes deteriorated.

In addition, followings are proposed: a resin film key top board wherein a physical plastic deformation process or a physical thinning process which is applied to a part or a whole of a base part is carried out by patting or pressing with a frog-like jig (See Japanese Laid-Open Patent Application No. 2001-76581) ; a plastic deformation product which is plastically deformed by loading stress while heating a rubber or a resin material being preformed into a sheet form continuously by extrusion molding (See Japanese Laid-Open Patent Application No. 2000-135744); and a method for manufacturing weatherstrip comprising the steps such as the formation process of an insert formed from a band-like metal sheet, the extrusion molding process to form a coated band-like body by coextruding and coating a rubber or resin using the insert as a core material, and the plastic deformation process to form a weatherstrip by plastically deforming the coated band-like body into a predetermined shape (See Japanese Laid-Open Patent Application No. 1993-237904). However, in the invention described in the above-mentioned Japanese Laid-Open Patent Application No. 2001-76581, plastic deformation of the resin film is conducted by heating the tip of the frog-like jig at a temperature of a glass transition point or higher and at a temperature of a softening point or lower of the resin film. In the invention described in the above-mentioned Japanese Laid-Open Patent Application No. 2000-135744, the rubber or the resin material needs to be heated, and the invention described in the above-mentioned Japanese Laid-Open Patent Application No. 1993-237904 is directed to the plastic deformation of the resin wherein the metal body is used as the core material. None of the inventions described in these publications relate to a product obtained by so-called cold forming only the resin sheet without containing metal, nor a method for manufacturing thereof.

On the other hand, concerning HIPS, the more rubber content being blended into polystyrene is included, the more impact resistance can be obtained, but tensile strength, heat resistance, light stability, formability, surface luster, transparency, or the like are reduced. Therefore, HIPS containing the rubber content of 5 to 20% by weight is generally known. As for a method for blending rubber into polystyrene, a method wherein rubber is dissolved in styrene monomer to polymerize a styrene monomer, or a method wherein rubber and polystyrene, both of them are polymers, are blended mechanically, or both polymers are mixed in latex state can be exemplified. According to the former polymerizing method, as a graft copolymer wherein rubber has side chains of polystyrene can be obtained to improve the impact resistance significantly, it is used a lot. For example, an impact resistant polystyrene-based resin composition comprising: (a) 5 to 97% by weight styrene-based polymer having a syndiotactic structure; (b) 3 to 95% by weight blended matter of 97 to 10% by weight rubbery elastomer containing a styrene component, and 3 to 90% by weight styrene-based polymer having a syndiotactic structure; and (c) 0 to 10% by weight rubbery elastomer containing a styrene component and a polar group, is proposed. An impact resistant polystyrene-based resin composition which has improved the impact resistance, elongation and the like while maintaining the properties such as heat resistance, chemical resistance, mechanical strength, which are inherent to polystyrene of syndiotactic structure, is proposed (See Japanese Laid-Open Patent Application No. 1997-100377).

US3582456 describes composites, which may be cold-formed into articles of manufacture, having a matrix layer of a rubber modified interpolymer system of monovinyl aromatic compound in which is embedded an interlayer of metallic filamentous material.

The object of the present invention is to provide a resin sheet for cold forming wherein a product having the shape retaining property can be manufactured by cold forming, especially a resin sheet for cold forming such as an impact resistant polystyrene-based resin sheet, a cold formed product such as a cap of a container manufactured with using the resin sheet for cold forming and a method for manufacturing thereof, a sealed container comprising the cap manufactured with using the resin sheet for cold forming and a method for manufacturing thereof.

The inventors of the present invention had the basic concept of being able to apply to a conventional filling machine using an aluminum cap material without comprising thermoforming apparatus of a cap material, that is, making a cold forming product of resin sheet, and undertook the development of polystyrene resin cap having the shape retaining property and impact resistance, being excellent in hygiene and appearance, preventing leakage of filled contents, being capable of using a metal detector to detect a metal foreign matter, furthermore, not requiring to separate from a polystyrene container for disposing to improve recycling efficiency by being constituted of the same material as the container, being excellent in peeling property when it is opened, and being able to prevent spoilage or deterioration of filled contents in the container. By using such resin cap, it can not only prevent the filling machine from being large-sized, complicated, and low speed, but also can use the conventional filling machine without comprising the thermoforming apparatus without modification. Therefore, as a cap material, the inventors selected the polystyrene-based resin same as the polystyrene container, have made a keen study concerning a material for the resin sheet with which a cap being excellent in shape retaining property can be manufactured by cold forming, especially High Impact Polystyrene(HIPS), manufactured the resin sheet from resin composition mixed predetermined high impact polystyrene and predetermined styrene-butadien copolymer at a predetermined rate, manufactured the cap from this resin sheet by cold forming, and confirmed that it could be the cap being excellent in shape retaining property and suitable for a practical use. The present invention has been thus completed.

### Disclosure of the Invention

In other words, the present invention relates to a resin sheet for cold forming according to present claims 1 to 17.

The present invention further relates to a cold formed product according to present claims 18 and 19 that is fixed to a resin formed product and has a shape retaining property obtained by cold forming a resin sheet for cold forming at a temperature lower than a glass transition point of resin that constitutes the resin sheet, wherein the resin sheet for cold forming is the resin sheet for cold forming according to any one of claims 1 to 17.

Furthermore, the present invention relates to a method according to claims 20 to 22 for manufacturing a cold formed product having the shape retaining property, wherein a resin sheet for cold forming is cold formed at a temperature lower than a glass transition point of resin that constitutes the resin sheet, when manufacturing a formed product that is fixed to a resin formed product wherein the resin sheet for cold forming is the resin sheet for cold forming according to any one of claims 1 to 17.

The present invention further relates to a sealed container according to claim 23 comprising a resin container and a cap fixed to the resin container, wherein the cap is manufactured by cold forming the resin sheet for cold forming, wherein the resin sheet for cold forming is the resin sheet for cold forming according to any one of claims 1 to 17.

The present invention further relates to a method for manufacturing a sealed container according to claims 24 to 26 comprising: cold forming a resin sheet for cold forming at a temperature lower than a glass transition point of resin that constitutes the resin sheet to manufacture a cap having the shape retaining property; and fixing the cap and the resin container, wherein the resin sheet for cold forming is the resin sheet for cold forming according to any one of claims 1 to 17.

### Brief Description of Drawings

Fig. 1 is a figure that shows one example of a resin sheet for cold forming of the present invention.
Fig. 2 is a figure that shows one example of the resin sheet for cold forming of the present invention.
Fig. 3 is a figure that shows one example of the resin sheet for cold forming of the present invention.
Fig. 4 is a figure that shows one example of the resin sheet for cold forming of the present invention.
Fig. 5 is a figure that shows one example of the resin sheet for cold forming of the present invention.
Fig. 6 is a figure that shows a cap of a sealed container obtained from the resin sheet for cold forming of the present invention.
Fig. 7 is a figure that shows a container of the sealed container obtained from the resin sheet for cold forming of the present invention.
Fig. 8 is a figure that shows the sealed container obtained from the resin sheet for cold forming of the present invention.

### Best Mode of Carrying Out the Invention

As for a resin sheet for cold forming of the present invention, there is no specific limitation as long as it is a resin sheet that is used to manufacture a cold formed product that is fixed to a resin formed product, and made of a base material layer (single layer body) or a base material layer on which a functional layer is laminated (laminated body), and as long as it is a resin sheet for cold forming wherein the cold formed product has the shape retaining property. It can be a single-layer structure made of only base material layer, or a laminated structure wherein a functional layer is laminated on both surfaces or either one of surfaces of the base material layer. As for the functional layer, a sealant layer having an adhesive function, an antistatic layer having an antistatic function, a barrier layer having a gas penetration blocking function, a printing layer having a display function, a protection layer having a protection function for the printing layer, a strength-reinforcing layer having a prevention function for cracks of edge, a wear-resistant layer having a damage prevention function and the like can be exemplified.

In the prevent invention, cold forming refers to a forming carried out under an atmosphere of temperature lower than a glass transition point of the resin (Tg). Such cold forming is preferably carried out using a cold forming machine used for forming aluminum foil and the like by compressing a sheet material with a male die into a female die to press at high speed. According to the cold forming, it is possible to cause plastic deformation such as shaping, bending, shearing, drawing without heating.

Moreover, the above-mentioned plastic deformation refers to a deformation which occurs when elasticity of the material exceeds its elastic limit. By loading stress at yield point or higher to the material, significant deformation occurs. For example, in case of a polystyrene-based resin sheet, when plastic deformation is occurred at a temperature lower than a glass transition point (Tg) of polystyrene-based resin constituting the sheet, generally at 10 to 60° C, preferably at room temperature or ordinary temperature, the sheet becomes whitened. Thus, it is possible to confirm whether plastic deformation occurs or not by visually checking whether the whitening of the sheet is caused or not. Moreover, glass transition points (Tg) of respective resins are as shown in Table 1.

**Table 1**

| kind | Tg (°C) |
|---|---|
| Polyvinyl chloride | 70-87 |
| Polystyrene | 80-100 |
| Polymethyl methacrylate | 72-105 |
| Acrylic styrene | 115 |
| Polycarbonate | 145-150 |
| Low-density polyethylene | -120 |
| Medium-density polyethylene | -120 |
| High-density polyethylene | -120 |
| Polypropylene | -10 |
| Polyamide | 50 |
| Polyethylene terephthalate | 69 |
| Polyethylene naphthalate | 115 |

The base material layer of the resin sheet for cold forming of the present invention is a layer having cold formability which makes it possible to form a secondary formed product having the shape retaining property by plastic deformation by cold forming the sheet. As for a material of the base material layer it contains a high impact polystyrene Furthermore, it is preferable that both the cap and the resin container contain polystyrene-based resin as a main component, as they are excellent in tensile strength, heat resistance, light stability, formability, and surface luster. Moreover, additives such as plasticizer, stabilizer, flame retardant, antioxidant, ultraviolet absorber, colorant and antistatic agent, and subsidiary material additives such as reinforcing agent and filling agent can be added to these resins appropriately.

As for the above-mentioned polystyrene-based resin sheet for cold forming, the resin sheet which has total energy - energy to maximum force in a sheet having a thickness of 150 µm measured by the falling weight impact test method conforming to ASTM D3763 being 0.015 J or more, and/or a deflection at maximum force in a sheet having a thickness of 150 µm measured by the falling weight impact test method conforming to ASTM D3763 being 10 mm or less, can be preferably exemplified.

The above-mentioned falling weight impact test method conforming to ASTM D3763 is a high speed impact test method conducted at room temperature, and the forming process of the resin sheet by cold forming is a forming process accompanied with the plastic deformation such as forming, bending, shearing and drawing usually at room temperature. Therefore, as for a technique to assess the plastic deformation of the resin sheet at this time as a model, the high impact test at room temperature is considered to be effective. From this point of view, in the polystyrene-based resin sheet for cold forming of the present invention, the total energy - energy to maximum force and/or the deflection at maximum force have (has) a specific value when measured by the falling weight impact test method conforming to ASTM D3763 . Thus, the secondary formed product (cold formed product) obtained by cold forming the polystyrene-based resin sheet for cold forming of the present invention has the shape retaining property.

In the polystyrene-based resin sheet for cold forming of the present invention, it is necessary that the total energy - energy to maximum force in the sheet having a thickness of 150 µm measured by the falling weight impact test method conforming to ASTM D3763 is 0.015 J or more as mentioned above, but especially 0.02 J or more is preferable. When the total energy - energy to maximum force is 0.015 J or more, the sheet material is plastically deformed sufficiently without rupture, and the obtained cold formed products become uniform shape and have the shape retaining property. When the energy is 0.02 J or more, more remarkable effect can be obtained. The total energy - energy to maximum force of the falling weight impact test described herein refers to the absorbed energy between the deflection at maximum force and the deflection at the rupture in the total absorbed energy needed for a break obtained at the fallingweight impact test. Moreover, a value of the total energy - energy to maximum force in the sheet having a thickness of 150 µm measured by the falling weight impact test refers to a value measured with using a weight having a holder of 45 mm diameter and an impact core of 13 mm diameter, by making the rate of fall of the impact core 5.0 M/sec, and at 5000 lb of force, 1 K unit of force amplifier range, 2 µ second of sampling time, 5V of input sensitivity of loading.

Furthermore, in the polystyrene-based resin sheet for cold forming of the present invention, it is necessary that the deflection at maximum force in the sheet having a thickness of 150 µm measured by the falling weight impact test method conforming to ASTM D3763 is 10.0 mm or less as mentioned above, but especially 9 . 5 mm or less is preferable. When the deflection at maximum force is 10.0 mm or less, the sheet material is plastically deformed sufficiently without rupture, and the obtained cold formed products become uniform shape and have the shape retaining property. When the deflection at maximum force is 9.5 mm or less, more remarkable effect can be obtained. The deflection at maximum force in the falling weight impact test described herein refers to the amount of deflection (the amount of deflection between the tip of falling weight and the surface of a test piece of the sheet) at the time of maximum loading. Moreover, the value of the deflection at maximum force in the sheet having a thickness of 150 µm measured by the falling weight impact test refers to the value measured using the weight having the holder of 45 mm diameter and the impact core of 13 mm diameter, by making the rate of fall of the impact core 5.0 M/sec, and at 5000 lb of force, 1 K unit of force amplifier range, 2 µ second of sampling time and 5V of input sensitivity of loading.

As for the styrene monomer, concretely alkyl substituted styrene such as α-methylstyrene, α-ethylstyrene, α-n-propylstyrene, α-isopropylstyrene, α-n-butylstyrene, α-t-butylstyrene, o-methylstyrene, m-methylstyrene, p-methylstyrene, o-ethylstyrene, m-ethylstyrene, p-ethylstyrene, o-isopropylstyrene, m-isopropylstyrene, p-isopropylstyrene, o-t-butylstyrene, m-t-butylstyrene, p-t-butylstyrene can be exemplified. As for a polystyrene-based resin, it can be a homopolymer of these monomers or a copolymer of two or more kinds of them. As for a copolymer, it can be any one of random copolymer, alternating copolymer, block copolymer, graft copolymer and the like.

Moreover, as for the above-mentioned rubber modified polystyrene-based resin, anything can be used as long as it is so-called High Impact Polystyrene (HIPS) wherein a synthetic rubber is blended with polystyrene. As for a blending method, it can be any blending method such as a method wherein rubber and polystyrene, which are both polymers, are blended mechanically, or both are mixed in latex state, or a method wherein rubber is dissolved in styrene monomer to polymerize, but a method wherein a styrene-based monomer is polymerized in the presence of rubber-like polymer is preferable. The high impact polystyrene obtained from this method wherein a styrene-based monomer is polymerized in the presence of this rubber-like polymer is a graft copolymer having side chains of polystyrene to rubber. The high impact polystyrene has a structure wherein soft component particles are present dispersed in polystyrene forming matrix. As for a soft component particle, a particle having a structure generally termed "salami structure" or "single occlusion structure" wherein polystyrene is occluded to the rubber-like polymer is preferable, but it is not limited to these.

Furthermore, as for a styrene-based monomer, a styrene-based monomer same as the above-mentioned GPPS can be exemplified. As for a rubber-like polymer, polybutadiene, styrene-butadiene copolymer, polyisoprene and the like can be exemplified. Among them, a styrene-butadiene copolymer is especially preferable. As for the styrene-butadiene copolymer, SBR-based thermoplastic rubber can be exemplified, and the styrene-butadiene block copolymer having SB or SBS structure, or SEBS wherein these are fully or partly hydrogenated can be used.

As for a rubber modified polystyrene-based resin contained in the base material layer, a composition consisting of only high impact polystyrene, or consisting of high impact polystyrene and styrene-butadiene copolymer, among them a composition consisting of 100 to 70% by weight of high impact polystyrene and 0 to 30% by weight of styrene-butadiene copolymer, especially the one contains the resin composition of the present invention consisting of 100 to 70% by weight of high impact polystyrene (hereinafter referred to as "high impact polystyrene (A)")that is obtained by polymerizing a styrene-based monomer in the presence of a rubber-like polymer, and has a matrix whose weight-average molecular weight is 150000 to 300000, a styrene content of 82 to 94% by weight, a rubber content of 6 to 15% by weight, and a liquid paraffin content of 0 to 3.0% by weight; and 0 to 30% by weight of styrene-butadiene copolymer (hereinafter referred to as "styrene-butadiene copolymer (B)") that has a styrene content of 30 to 90% by weight, and a butadiene content of 70 to 10% by weight is especially preferable, as it enables the plastic deformation by cold forming the sheet, and the secondary formed product obtained by cold forming the sheet has both excellent impact resistance and excellent shape retaining property.

When the rubber content of above-mentioned high impact polystyrene (A) is 6% by weight or more, preferably 9% by weight or more, the sheet is not ruptured at the time of cold forming. When the rubber content is 15% by weight or less, as the sheet become even more easily plastically deformed by cold forming, and the obtainable secondary formed product has the sufficient shape retaining property, it is preferable. Moreover, the rubber content of high impact polystyrene can be calculated by a method by calculating from the amount of rubber used at the time of manufacturing, or a method for assessment by preparing the analytical curve by infrared absorption spectrometry (IR) method using high impact polystyrene containing known rubber content as a standard sample.

Furthermore, when a liquid paraffin content of the above-mentioned high impact polystyrene (A) is 3.0% by weight or less, preferably 2.0% by weight or less, as the sheet becomes even more easily plastically deformed by cold forming, and the obtainable secondary formed product has the sufficient shape retaining property, it is preferable. As for the liquid paraffin, cycloparaffin or the like such as cyclopentane, cyclohexane, cycloheptane can be concretely exemplified, but white mineral oil which can be used for food packaging material (mineral oil which is a mixture of alkyl naphthene hydrocarbon and has an weight-average molecular weight of about 300 to 600) can be preferably exemplified.

Among the above-mentioned high impact polystyrenes (A), the one having a matrix whose weight-average molecular weight is in the range of 150000 to 300000, especially 200000 to 250000 is preferable. When the matrix whose weight-average molecular weight is 150000 or more, the secondary formed product obtained by cold forming becomes a product having more appropriate strength. When the matrix whose weight-average molecular weight is 300000 or less, as the sheet becomes even more easily plastically deformed, and the obtainable secondary formed product has the sufficient shape retaining property, it is preferable.

A molecular weight of the matrix of the high impact polystyrene (A) can be measured by the following method. That is, 1g high impact polystyrene is dissolved in 30 ml methyl ethyl ketone/methanol mixed solvent (20/3 volume ratio). Next, a matrix part and soft component particles being insoluble component are separated by the centrifugal separation, the supernatant other than insoluble component is taken out by decantation, and it is gradually put into about 500 ml methanol with stirring to precipitate the polymer part. The polymer part is filtered to separate, methanol is removed by drying, obtained dry sample is dissolved in tetrahydrofuran to make the concentration to be 2 mg/ml, and the molecular weight of matrix of dissolution is measured using gel permeation chromatography (GPC). GPC being used should comprise a differential refractometer (RI detector) as a detector, and the molecular weight can be calculated by the analytical curve calculated using a commercially available monodisperse polystyrene.

The high impact polystyrenes (A) have a swelling degree of soft component particles of 30 or less When the swelling degree of soft component particles is 30 or less, the sheet becomes even more easily plastically deformed by cold forming, and the obtainable secondary formed product has the sufficient shape retaining property.

The above-mentioned swelling degree can be measured by the following method. That is, 0.4 g high impact polystyrene is dissolved in 18 ml toluene and left it for more than 2 hrs. The obtained toluene solution is centrifuged (4500 rpm × 2 hrs) to separate an insoluble matter. The supernatant is discarded, the insoluble matter is weighed, and making its weight "a". Next the insoluble matter is dried in the vacuum dryer, and making the weight after drying "b". The swelling degree can be calculated from "a/b".

The high impact polystyrenes (A) have an average particle diameter of contained soft component particles is 0.5 to 10 µm, especially 1 to 5 µm. When it is 0.5 µm or more, preferably 1 µm or more, the sheet is not ruptured when cold forming the sheet. When it is 10 µm or less, preferably 5 µm or less, the sheet becomes even more easily plastically deformed, and the obtainable secondary formed product has the sufficient shape retaining property.

The average particle diameter of the above mentioned soft component particles can be measured by the following method. That is, high impact polystyrene is dissolved in methyl ethyl ketone to make the concentration about 1%. This sample solution is exposed to the laser beam using a laser diffraction particle size analyzer (SALD-1100; Shimadzu Corporation), an image of generated diffraction ray and scattered ray is detected, and the size and the amount of particles are calculated by the pattern and the intensity of the image. For the average particle diameter, in cumulative volume distribution, 50% of particle diameter can be used.

On the other hand, among the above-mentioned styrene-butadiene copolymers (B), the one having a styrene content of 30 to 90% by weight, and a butadiene content of 10 to 70% by weight is preferable in point of being able to add more superior shape retaining property and impact resistance to the cold formed product of the sheet.

To the base material layer in the resin sheet of the present invention, if necessary, various additives, for example, additives such as antioxidant, plasticizer, heat stabilizer, ultraviolet absorber, light stabilizer, lubricant, mold-releasing agent, flame retardant, flame retardant aid, pigment, dye, carbon black, and antistatic agent can be blended, or organic-based fine particles or inorganic-based fine particles can be added insofar as it does not impair the performance of the base material layer. Moreover, although a thickness of the base material layer in the resin sheet of the present invention is not particularly limited, in the range of 50 µm to 1 mm is preferable in case of, for example, polystyrene-based resin sheet used to manufacture the cold forming product such as the cap which needs to be peeled between the resin formed product such as an opening container and the cap.

The functional layer laminated on either one of surfaces or both surfaces of the base material layer in the resin sheet of the present invention is provided to give various functions to improve adhesiveness, antistatic property, wear resistance, aesthetic property, weather resistance, gas barrier property, ultrasonic vibration resistance (When ultrasonic sealing, if a fragile part (such as damages on a surface caused at the time of forming) is generated in the formed product by the vibration and pressure, damages such as holes and breaks are caused in the fragile part. Here, the resistance against the damage caused by this vibration is referred to as ultrasonic vibration resistance.), and resistance for cracks of edge (When ultrasonic sealing, the part of the seal head abutting the edge is damaged by the vibration and pressure and becomes easily cut at the time of peeling. Here, the resistance thereto is referred to as resistance against cracks of edge) and the like. For example, sealant layer, antistatic layer, printing layer, barrier layer, strength-reinforcing layer, wear-resistant layer and the like can be exemplified. The functional layer can be constituted of multilayer having respective functions, or of one layer having plural functions within one layer. As for a resin sheet comprising these functional layers, for example, the one wherein the sealant layer is laminated on both surfaces or either one of surfaces of the base material layer; the one wherein the sealant layer and the antistatic layer are laminated respectively on both surfaces of the base material layer; the one wherein the sealant layer is laminated on either one of surfaces of the base material layer, and the printing layer and the antistatic layer are laminated on the other surface sequentially; the one wherein the sealant layer is laminated on either one of surfaces of the base material layer, and the printing layer and the wear-resistant layer are laminated on the other surface sequentially, the one wherein the barrier layer is laminated between the sealant layer and the base material layer; and the one wherein the strength-reinforcing layer is laminated between the sealant layer and the base material layer can be exemplified. Moreover, if necessary, additives such as antioxidant, heat stabilizer, ultraviolet absorber, light stabilizer, flame retardant, mineral oil, external lubricant can be blended to these functional layers appropriately, or organic-based fine particles or inorganic-based fine particles can be added insofar as it does not impair the performance.

As for a method for manufacturing the functional layers such as the above-mentioned sealant layer, antistatic layer, a method wherein a coating solution containing the component appropriate for the respective functions, for example, adhesive components, antistatic agent and the like is applied to either one of surfaces or both surfaces of the base material layer, and dried; a method wherein the film in which these components are kneaded is manufactured and laminated, and the like can be exemplified. As for a method for coating, methods such as roll coater, knife coater, gravure and knife coater and spraying can be adopted. The surface of the base material layer may be reformed in advance by methods such as corona discharge treatment method, ozone treatment method, and plasma treatment method. Moreover, in case of a functional film for laminate, the one containing the same kind of resin as the base material layer is preferable from the viewpoint of recycling efficiency. For example, when the base material layer contains the above-mentioned polystyrene-based resin, the one containing GPPS and/or styrene-butadiene copolymer is preferable.

The sealant layer as the above-mentioned functional layer is laminated on both surfaces or either one of surfaces of the base material layer directly or indirectly in order to control the adhesive strength between the cold formed product formed from the resin sheet of the present invention and the resin formed product. When it is necessary to control the adhesive strength, for example, when it is necessary to peel between the resin formed product and the cold formed product by fingers, it is preferable to place the sealant layer. However, when it is not necessary to control the adhesive strength, for example, the formed product wherein the resin formed product and the cold formed product are manufactured from the same kind of resin and high adhesive strength is preferable, the sealant layer is not necessarily needed. Components and a thickness of the sealant layer can be selected appropriately according to the components of the cold formed product and the resin formed product that are fixed through the sealant layer, and its fixing method (for example, physical heat sealing and chemical adhesion) . As for an adhesive compound in chemical adhesion, vinyl-based polymer such as starch, glue, dextrin, vinyl acetate resin, vinyl chloride resin and acrylic resin, rubber such as natural rubber, chloroprene rubber and butyl-rubber, amino resin, epoxy resin, phenol resin, unsaturated polyester, polyurethane, polyimide and the like can be exemplified. However, physical heat sealing by the sealant film for laminate which does not need to be adjusted the fixing part is more preferable than the chemical adhesion by the sealant layer formed by applying the adhesive component. Moreover, it is preferable that a thickness of the sealant layer is generally in the range of 10 to 50 µm.

In the resin sheets wherein the sealant layers are laminated, when they are stored or delivered with being wound in a roll shape, sheets may be adhered each other, or blocking may occur. In order to prevent this, a method wherein an adhesive layer having adhesive function and a thermoplastic resin layer such as LDPE (Low Density polyethylene) which is difficult to adhere are laminated by melting and co-extruding is known (See Japanese Laid-Open Patent Application No. 1994-31866). For the sealant layer of the present invention, a single adhesive layer having the above-mentioned adhesive function, and double layer type wherein the adhesive layer and the thermoplastic resin layer being difficult to adhere are laminated are included, for convenience. As for the above-mentioned sealant film for laminate, a single adhesive layer and a double layer type wherein an adhesive layer and another thermoplastic resin layer being difficult to adhere are included, for convenience. Moreover, in the present invention, the film wherein the above-mentioned adhesive layer and the strength-reinforcing layer explained below are laminated by melting and co-extruding, is referred to as a strength reinforcement sealant film.

When the above-mentioned sealant film for laminate is used for adhering, for example, as for a sealant layer in case that the resin formed product and the cold formed product containing polystyrene-based resin as a main component are ultrasonically welded, the sealant film containing the same kind of resin as the base material layer as a main component can be preferably exemplified. Blending the resin formed product or polystyrene-based resin of the same kind as the base material layer with other thermoplastic resins makes it possible to control the peel strength according to its blended amount. Moreover, a sealant film wherein the material being excellent in adhesiveness such as thermoplastic elastomer, ethylene-based copolymer or the like is used for a main part can be preferably exemplified. As for the above-mentioned ethylene-based copolymer, ethylene-vinyl acetate copolymer, ethylene-unsaturated carboxylic acid ester copolymer or the like can be exemplified. For the sealant layer, if necessary, various additive components , for example, additives such as antioxidant, heat stabilizer, ultraviolet absorber, light stabilizer, lubricant, flame retardant, flame retardant aid, antistatic agent, pigment, carbon black, mineral oil, and external lubricant can be blended. Furthermore, organic-based fine particles or inorganic-based fine particles can be added insofar as it does not impair the sealing function.

Adhesive strength between the sealant layer as the above-mentioned functional layer and the base material layer, or adhesive strength between the strength-reinforcing layer as the above-mentioned functional layer and the base material layer is preferably 3 N/15 mm in width or more, especially preferably 5 to 8 N/15 mm in width. When the adhesive strength between the sealant layer and the base material layer, or the adhesive strength between the strength-reinforcing layer and the base material layer is 3 N/15 mm in width or more, at the time of peeling the cold formed product that is fixed to the resin formed product by fingers, occurring of delamination between the sealant layer and the base material layer, or between the strength-reinforcing layer and the base material layer can be adjusted, and adhering and remaining of splinter of the sealant layer to the resin formed product, which is caused by being peeled between the resin formed product and the cold formed product and by delamination between the base material layer and the sealant layer, or between the strength-reinforcing layer and the base material layer, can be avoided. When the adhesive strength is 5 to 8 N/15 mm in width or more, more remarkable effect can be obtained. The adhesive strength can be measured by the following method conforming to JIS-K6854. That is, unadhered parts of the base material layer and the sealant layer, or of the strength-reinforcing layer and the base material layer are pinched with chucks respectively using a tensile strength tester, opening of both layers is set at 180 degree, unadhered parts are pulled at the pulling speed of 300 mm/min, and the load at that time is measured. By converting the load into per 15 mm of adhesive in width, the adhesive strength can be calculated. Furthermore, when better peeling property between the resin formed product and the cold formed product is required, it is preferable that flexibility of the functional layer is made larger than that of the base material layer, and hardness is made smaller than that of the base material layer in order to obtain the comfortable peeling property.

The above-mentioned antistatic layer as the functional layer is provided so that triboelectric charging is reduced to enable continuous forming of the formed product from the resin sheet of the present invention. The antistatic layer is normally laminated on the opposite side of the laminated surface of the sealant layer with respect to the base material layer directly or indirectly. The sheet of the present invention comprising the functional layer can prevent the formed product from being difficult to be taken out or fed, and from being unable to be delivered in the following case. When continuous forming is carried out, the sheet and the die are frictioned in die part and the formed product is significantly charged. As a result, obtained formed product adheres to the die without being demolded, and the sheet or the like to be fed next and the formed product are overlapped or the formed product adheres by electrostatic charging to a peripheral part of the die or a shooter part, the formed product immediately after forming drifts in the air and so on, whereby it becomes difficult to take out or feed the formed product and the delivery becomes impossible. Such electrostatic charge of the formed product can be avoided by improving electroconductivity of the sheet surface and/or improving sliding property of the sheet surface. As for an improvement of electroconductivity, it is preferable to make the surface resistivity value of the sheet surface of the present invention measured conforming to JIS-K6911 be in the range of 10⁶ to 10¹⁴ Ω. Moreover, as for an improvement of sliding property, it is preferable to make the coefficient of surface static friction of the sheet surface of the present invention measured conforming to JIS-K7125 be in the range of 0.1 to 0.4.

In order to make the surface resistivity value of the sheet surface of the present invention be in the range of 10⁶ to 10¹⁴ Ω, for example, it can be manufactured as the antistatic layer by applying surfactant including antistatic agent or anti-fogging agent or electroconductive substance such as hydrophilic macromolecule onto the sheet surface, or it can be manufactured as the sheet by kneading antistatic agent or anti-fogging agent into the resin. For example, in case of polystyrene-based resin, when the antistatic layer is formed by applying the electroconductive substance and the like to the surface of the base material layer of polystyrene-based resin, applying amount is preferably in the range of 20 to 500 mg/m². When the surface resistivity value of polystyrene-based resin sheet is larger than 10¹⁴ Ω, triboelectric charging is significant at the time of continuous forming as mentioned above, and it may become difficult to take out or feed by the formed product being adhered to the die part. Moreover, in order to make the coefficient of surface static friction of the sheet surface be in the range of 0.1 to 0.4, for example, it can be manufactured as the functional layer by applying surface lubricant such as polysiloxane resin to the sheet surface, or it can be manufactured as the sheet by kneading the surface lubricant or the like into resin. When manufacturing the functional layer, polysiloxane resin can be used in either form of oil or water-based emulsion. When applying, the applying amount is preferably in the range of 0.1 to 50 mg/m². Moreover, as mentioned above, by kneading the antistatic agent or surface lubricant or the like directly into the material resin of the base material layer, it can be substituted for the antistatic layer comprising an antistatic effect having a prescribed surface resistivity value or coefficient of surface static friction.

The printing layer as the above-mentioned functional layer is placed for trade description or for surface decoration of the cold formed product. It can be placed either on the surface of the base material layer or between the base material layer and the other functional layer being laminated on the base material layer. However, when there is (are) other functional layer (s) on both surfaces or either one of surfaces of the base material layer, it is preferable that the printing layer is placed between the base material layer and the other functional layer in order to avoid omission and damage of the printing surface caused by the friction between the sheet and die or the like at the time of cold forming. As for a method for forming the printing layer, a method wherein it is formed by carrying out the printing on the surface of the base material layer; a method wherein it is formed by laminating the other functional layer on the printing surface wherein printing is carried out on the surface of the base material layer; a method wherein it is formed by carrying out printing on the backside of the other functional layer manufactured as a film so that it can be also used as the printing layer, and by laminating this printing layer-cum-film in such a manner that the printing surface contacts the base material layer; a method wherein it is formed by using the film wherein printing is carried out separately, as the printing layer, and by laminating this film between the base material layer and the other functional layer; or the like can be exemplified. Furthermore, the printing layer can be decorated with metallic luster.

The barrier layer as the above-mentioned functional layer is placed to add weather resistance, gas barrier property and the like against light, gas and the like to the sheet of the present invention, and when the product formed from the sheet of the present invention is a container or its cap, or packaging material or the like, it is placed to add a function of aroma retention and a function of permeation prevention of water vapor and poisonous gas to prevent quality change of the content. The barrier layer is generally manufactured as a gas impermeable film, and when other functional layer(s) is (are) placed on the surface of the base material layer, or placed on both surfaces or either one of surfaces of the base material layer, it is placed between other functional layer (s) and the base material layer, for example, between the sealant layer and the base material layer. As for the above-mentioned gas impermeable film, a resin film manufactured from resin containing a resin component constituting the base material layer is preferable. If necessary, an ultraviolet absorber or the like can be contained. Thickness of the gas impermeable film forming the barrier layer is generally in the range of 10 to 100 µm.

The strength-reinforcing layer as the above-mentioned functional layer is placed to give the resistance against cracks of edge in the case, for example, when the resin formed product such as a container containing polystyrene-based resin as a main component and the cold formed product such as a cap are ultrasonically welded, at the time of peeling the cold formed product adhered to this resin formed product by fingers, the corner part (edge part) of the top face of the cap corresponding to the welding part is damaged, that is, cracks of edge occur. By placing the strength-reinforcing layer having the function to reinforce strength between the base material layer and the sealant layer, said cracks of edge can be controlled. As for the above-mentioned strength-reinforcing layer, the one containing polyolefin-based resin is preferable. As for the polyolefin-based resin, polyethylene-based resin such as high-density polyethylene, low-density polyethylene, EVA (ethylene-vinyl acetate copolymer) resin, EVOH (ethylene-vinyl alcohol copolymer) resin, or polypropylene-based resin can be exemplified. Among them, low-density polyethylene-based resin is preferable, especially LLDPE (Linear Low Density Polyethylene) is preferable. Moreover, general thickness of the strength-reinforcing layer is preferably in the range of 10 to 100 µm, especially preferably in the range of 20 to 45 µm.

The wear-resistant layer as the above-mentioned functional layer is placed to give the resistance in the case, for example, in case of polystyrene-based resin being inferior in wear resistance is used for the base-material layer as a main component, when the surface get damaged at the time of cold forming, or when the resin formed product and the cold formed product are ultrasonically welded, said damaged part of the surface is affected by ultrasonic vibration to generate damages such as holes or breaks in a skirt part of the cap. By placing the wear-resistant layer on the surface being the outermost surface, damages at the time of cold forming and ultrasonically welding can be avoided. As for the above-mentioned wear-resistant layer, it is not particularly limited as long as it is a layer containing a wear-resistant resin. The layer containing a polyolefin-based resin and/or nylon resin, especially a film for laminate can be preferably exemplified. As for the above-mentioned polyolefin-based resin, a polyethylene-based resin such as high-density polyethylene, low-density polyethylene, EVA (ethylene-vinyl acetate copolymer) resin and EVOH (ethylene-vinyl alcohol copolymer) resin, or polypropylene-based resin such as CPP (Cast Polypropylene) and OPP (Biaxially Oriented Polypropylene) can be exemplified. CPP is especially preferable as it is superior in the shape retaining property of the cap by cold forming.

Incidentally, as mentioned above, cold forming process accompanied with the plastic deformation such as forming, bending, shearing and drawing is carried out to the resin sheet for cold forming of the present invention by compressing the sheet material with the male die into the female die to press at high speed without heating, generally at room temperature. As for a technique to assess the plastic deformation of the sheet at this time as amodel, the high speed impact test at room temperature is considered to be effective. From this point of view, in the resin sheet for cold forming of the present invention, as mentioned above, it is preferable that the total energy - energy to maximum force and the deflection at maximum force when measured by the falling weight impact test method conforming to ASTM D3763 have (a) specific value(s).

The resin sheet for cold forming of the present invention can be colored including white-coloring. Especially when the sheet of the present invention contains polystyrene -based resin, it is preferable that either one of the base material layer or the functional layer, or both of them is/are white-colored. When the sheet containing polystyrene-based resin is formed and processed, as a bended part wherein plastic deformation occurred is whitened, the one wherein these layers themselves previously white-colored can blur whitening of the bended part by plastic deformation. To color these layers white, the sheet can be manufactured by adding white pigment and dye such as titanium oxide and zinc oxide to the raw resin in the range of 0.5 to 8% by weight.

The resin sheet for cold forming of the present invention can be manufactured by the known method using a sheet extruding equipment, a press processing equipment or the like. The sheet can be manufactured as a single base material layer, or a laminated body of the base material layer and one or more functional layer (s), for example, by a method wherein the base material layer and the functional layer are co-extruded using the sheet extruding equipment at the same time; a method wherein the base material layer and the functional layer are dry laminated using two-component reactive adhesive; a method wherein the base material layer and the functional layer are laminated by thermal lamination; a method wherein the functional layer is extrusion coated on the base material layer; a method wherein the printing is carried out on the base material layer or the functional layer; or a method combined these methods appropriately.

The resin sheet for cold forming of the present invention is explained in detail as mentioned above, a thickness of the resin sheet for cold forming of the present invention differs depending on the kinds and shapes of the cold forming products and the like, and it is not particularly limited. The one having a thickness of 0.2 mm or less being recognized as a film or the one having a thickness of 1 mm or more being recognized as a thin plate are also usually included in the resin sheet for cold forming of the present invention. When the resin sheet for cold forming of the present invention is a sheet containing a polystyrene-based resin, it is preferable that the sheet thickness is in the range of 50 µm to 1 mm, among others in the range of 80 µm to 300 µm. When the sheet thickness is 50 µm or more, the formed product with strength such as a cap of a container can be manufactured from the polystyrene-based resin sheet. When 80 µm or more, the effect becomes more significant. When 1 mm or less, the sheet material is plastically deformed at the time of cold forming and the formed product having the shape retaining property can be obtained. When 300 µm or less, the effect becomes more significant.

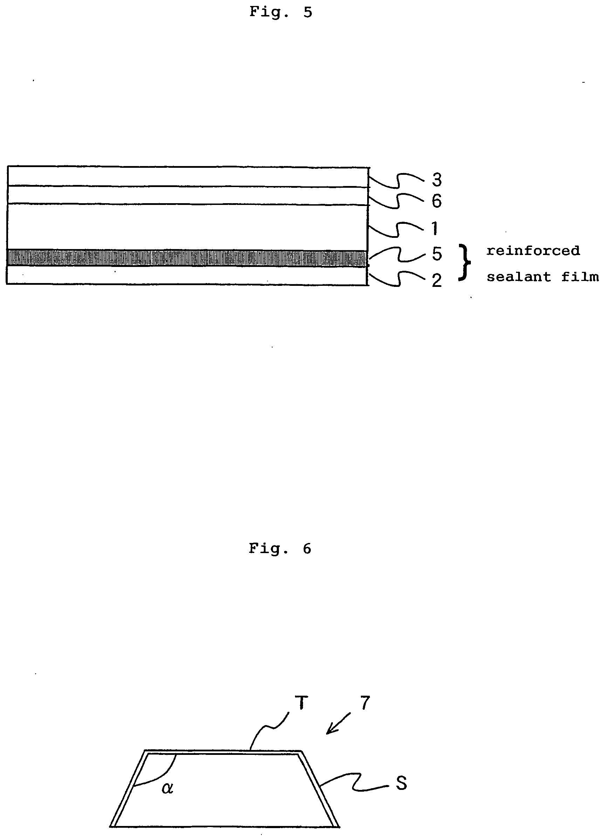

The cold formed product of the present invention manufactured by cold forming from the resin sheet for cold forming of the present invention is not particularly limited as long as it fixes to the after-mentioned resin formed product and has the shape retaining property. The term "have the shape retaining property" used herein refers to having a property to retain the bended and plastically deformed shape as mentioned above. Its shape/form is not particularly limited as long as the cold formed product has the shape retaining property, and various formed products such as an open container and its cap can be exemplified. For example, when the cap manufactured by cold forming using the above-mentioned rubber modified polystyrene-based resin sheet as the cap of the open container which is the polystyrene resin product, the case that skirt part S which is formed perpendicularly (α=90°) to the top face T can retain α=130° to the top face T (Fig. 6) can be preferably exemplified.

Moreover, in general, to manufacture the cold formed product of the present invention using the resin sheet for cold forming of the present invention, compression forming method and the like such as a vacuum forming and a compressed air pressure forming wherein the resin sheet is pressed against cavity by air flow, or the resin sheet is pressed by roll to perform the forming such as embossing can be used. However, it is especially preferable to apply so-called press forming method wherein the resin sheet is plastically deformed and formed by sandwiching the resin sheet between a pair of male die and female die, and compressing the sheet with the male die into the female die to press at high speed. Especially the method wherein the forming process is performed using a cold forming machine generally used for formation of the aluminum foil and the like by the following steps of : high speed pressing the resin sheet at room temperature or ordinary temperature by the male and female dies; causing plastically deformation such as shearing, bending, drawing and forming the sheet; and forming is preferable. Plastic deformation is a deformation which occurs when elasticity of the material exceeds its elastic limit. Deformation becomes significant by loading stress equals to the yield point or higher to the material, and the formed product having the shape retaining property can be obtained. Forming stress is not particularly limited, and can be selected appropriately depending on a kind of the resin sheet or a shape of the formed product and the like.

As mentioned above, high speed pressing is generally performed at room temperature or ordinary temperature without heating, but in some cases, it can be performed under low temperature heating, at a temperature lower than a glass transition point (Tg) of the resin that substantively constitutes the resin sheet. For example, when the resin sheet is polystyrene-based resin sheet, it can be performed at a temperature lower than 80°, preferably in the temperature range from 10 to 60°, further at ordinary temperature or room temperature.

Especially when the cap of the beverage container is manufactured by cold forming the polystyrene-based resin sheet using the cold forming machine for the aluminum foil, it is preferable to form and process using the dies wherein the clearance between the male die and the female die is adjusted to 1.3 to 4.0 times to a thickness of the resin sheet, further it is preferable to use the dies adjusted to 1.5 to 3.5 times. When the clearance between the male die and the female die is 1.3 times or higher, the resin sheet is not destroyed during forming. When the clearance between the male die and the female die is 4.0 times or lower, the resin sheet is plastically deformed and the formed product having the shape retaining property can be manufactured.

In the resin formed product to which the above-mentioned cold formed product is fixed, material, shape, form and the like are not limited in any way. Any material can be used as the material of the resin formed product, but it is preferable to use the same kind of resin as the cold formed product, and the one containing , for example, PS (polystyrene) -based resin such as PS resin, AS (styrene acrylonitrile copolymer) resin, ABS (acrylonitorile butadiene styrene copolymer)-based resin, and AXS (terpolymer having acrylonitorile and styrene components) resin; PET-based resin such as unsaturated polyester resin and saturated polyester resin; polyethylene-based resin such as high-density polyethylene, low-density polyethylene, EVA (ethylene-vinyl acetate copolymer) resin, EVOH (ethylene-vinyl alcohol copolymer) resin; polypropylene-based resin; other polyolefin-based resins, polyacetal-based resin and polycarbonate resin can be exemplified, or it can be the material containing one or more kinds thereof. Among these, especially the one containing PS-based resin, ABS-based resin and PET-based resin is preferable. Moreover, additives such as plasticizer, stabilizer, flame retardant, antioxidant, ultraviolet absorber, colorant, antistatic agent, and subsidiary material additives such as reinforcing agent and filling agent can be added to these resins appropriately. As for a shape/form of the resin formed product containing the resin, anything including film, sheet, plate, bar, pipe, laminated body, fabric, net, nonwoven, various containers, packaging material, parts of various equipments can be used. As for a method for forming, any forming method including compression molding, transfer molding, laminated molding, injection molding, extrusion molding, blow molding, calendering, cast forming can also be used.

As for a method for fixing the cold formed product to the above-mentioned resin formed product, any method including adhesion and welding (fusion welding) can be used. As for a welding method, hot plate welding, hot air welding, impulse welding, ultrasonic welding and the like can be exemplified. Among these, ultrasonic welding is preferable as more uniform and high speed welding can be carried out. For example, as for an ultrasonic welding of the open resin container and the cap manufactured from the resin sheet having the sealant layer, welding can be carried out using the ultrasonic welding machine of specific specification to use for the specific purpose besides the common ultrasonic welding machine by giving ultrasonic wave whose frequency is 15 to 50 kHz, preferably 20 to 40 kHz, and whose amplitude is 16 to 126 µmpp, preferably 40 to 80 µmpp to the adhered face. As for a condition of the ultrasonic welding, for example, in case that the cold formed cap is sealed to the opening of polystyrene-based resin container and made it a sealed container, it is preferable that frequency is 20 to 40 kHz, output is 50 to 100 w/piece, irradiation time is 0.2 to 1 second and the like. The cap of the resin container such as a beverage container welded under this condition can be peeled by fingers, and at the same time, peel strength wherein the cap is not peeled if the sealed container is dropped through carelessness, can be obtained. Moreover, as for an adhesion method, a method wherein pressure application and deposition are carried out appropriately with adjusting the fixing strength by applying various adhesive agents to the predetermined surface of the cold formed product or the resin formed product, or providing the sealant layer containing constituent of the adhesive agent in the resin sheet for cold forming, and making it the sealant layer capable of obtaining fixing strength to the extent of being able to peel the cold formed product from the resin formed product by fingers, can be exemplified.

As for the fixing strength between the resin formed product and the cold formed product, it is preferable that the peel strength is in the range of 6 to 20 N/15 mm in width in a 180 degree peel test according to JIS-K6854, further in the range of 8 to 15 N/15 mm in width is more preferable. The peel strength is a value when a sheet manufactured from a resin material being the same kind of composition as the resin formed product and the sheet of the present invention are welded, for example, by the ultrasonic welding method, and the peel strength (180 degree peeling) is measured by making the opening of both sheets 180 degree. When the peel strength is 6 N/15 mm in width or more, in case of the beverage container as the resin formed product, and its cap and the like as the cold formed product, even if the container is dropped with the contents filled, the lid is not peeled, so its content is prevented from being leaked. When the peel strength is 20 N/15 mm in width or less, there is no difficulty in peeling the cap by hand. When the peel strength is in the range of 8 to 15 N/15 mm in width, it is more preferable as the above-mentioned effect can be more surely obtained.

The cap of the container manufactured from the resin sheet for cold forming of the present invention as the cold formed product has basically the form and physical property possessed by the resin sheet for cold forming. That is, it can consists of only the base material layer as a single-layer structure, or it can be the one having the functional layer(s) laminated on both surfaces or either one of surfaces of the base material layer. As for a functional layer, a sealant layer having adhesive function, an antistatic layer having antistatic function, other layers including a printing layer, a barrier layer and a strength-reinforcing layer can be exemplified. As for the above-mentioned base material layer, the one containing a composition consisting of 100 to 70% by weight of high impact polystyrene (A) and 0 to 30% by weight of styrene-butadiene copolymer (B) is preferable, and further it is preferable that the high impact polystyrene (A) has soft component particles that have the swelling degree of 30 or less and an average particle diameter in the range of 0.5 to 10 µm because the cap having excellent shape retaining property can be obtained. Moreover, the sealant layer, the antistatic layer, the printing layer, the barrier layer, the strength-reinforcing layer and the like laminated as the above-mentioned functional layer have the same functions and constitutions as these functional layers in the resin sheet for cold forming.

As a concrete example comprising the cap of the container manufactured by cold forming the resin sheet for cold forming of the present invention, the sealed container of the present invention can be exemplified, and it is preferable that the cap and the resin container of the sealed container contain the same kind of resin as a main component from the point of view of improving recycling efficiency. Especially the one wherein both the cap and the resin container contain polystyrene-based resin as a main component is preferable because it is excellent in tensile strength, heat resistance, light stability, formability and surface luster, and further the one manufactured using the resin sheet containing the high impact polystyrene as a main component is preferable as it does not get damaged even if the container is dropped through carelessness and is excellent in impact resistance. Moreover, if the peel strength between the cap and the open resin container is in the range corresponding to 6 to 20 N/15 mm in width in 180 degree peel test by the ultrasonic welding method or the like, when a straw is stuck into the cap, it is possible to drink the contents in the resin container without generating the peeling between the cap and the resin container.

As for the sealed container, it is preferable that the container is a liquid filled container, a beverage filled container, or a food filled container. Especially it is preferable that the container is the beverage filled container such as a container for lactic acid bacteria beverage and a food filled container such as a dairy product container because of the following reasons: heating process becomes unnecessary in a liquid filling equipment; downsize of the equipment can be planned; and even when the trouble arises, it is not necessary to discard the resin sheets of the cap material.

As for a method for manufacturing the above-mentioned sealed container, a method comprising the steps of: manufacturing the cap by blanking out the cap material of the extensive form of the cap from the resin sheet and by cold forming almost simultaneously; then feeding the cap into the opening of the resin container, and adhering between the resin container and the cap, can be concretely exemplified.

Cold forming of the cap material can be carried out using the die under atmosphere at the temperature lower than the glass transition point (Tg) of the resin. For example, the cap having shape retaining property can be formed using the cold forming machine generally used for the formation of aluminum foil and the like by causing plastic deformation such as shearing, bending, drawing and shaping in the cap material and by forming, by sandwiching the material between the male die and the female die and loading stress of yield point of the resin sheet or higher exceeding its elastic limit of the cap material at room temperature without heating.

When a cap of the sealed container is polystyrene-based resin, for example, to carry out cold forming using the cold forming machine for aluminum foil, it is preferable to use the die wherein the clearance between the male die and the female die is adjusted to 1.3 to 4.0 times to a thickness of the cap material, for example, 50 µm to 1 mm, further it is preferable to use the die adjusted to 1.5 to 3.5 times. When the clearance between the male die and the female die is 1.3 times or higher, the cap material is not destroyed during forming. When the clearance between the male die and female die is 4.0 times or lower, the cap material is plastically deformed, and the formed product having the shape retaining property can be manufactured. As for a condition of forming at this time, it is preferable to apply pressure at a temperature from 10 to 60° C, especially under room temperature or ordinary temperature. After the cap is formed, the cap material is fed to the opening of the resin container filled with contents, and in order to have the above-mentioned peel strength, the ultrasonic waves of 20 to 40 kHz are irradiated from above the cap for 0.2 to 1 second by the ultrasonic welding machine to weld and seal between the cap and the resin container.

In the following, examples of the cap obtained by manufacturing the sheet to which the resin sheet for cold forming of the present invention is applied, and by cold forming the manufactured sheet; and examples of the sealed container to which the cap is applied will be explained in detail with reference to the figures. However, the technical scope of the present invention is not limited to these examples in any way.

### Example 1 (Manufacturing of the sheet)

The sheet having a thickness of 150 µm in the following concrete examples 1 to 12 was manufactured by extruding the resin in a molten state using T-Die extruding machine having a diameter of 65 mm.

### Concrete example 1

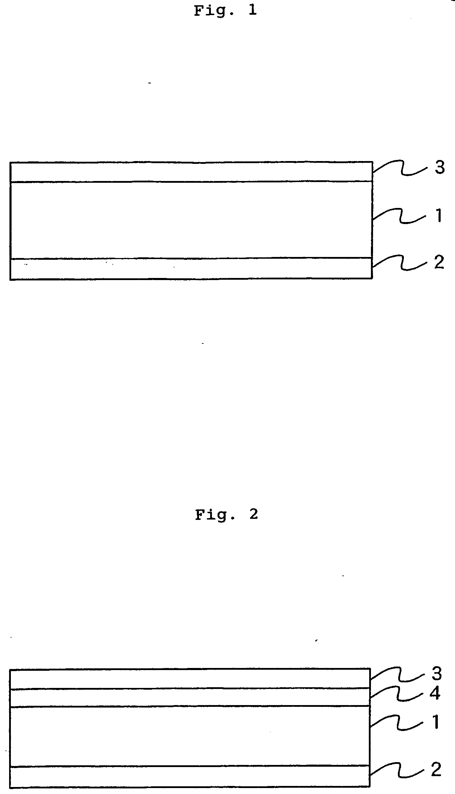

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm was extruded in a molten state to obtain the sheet of the base material layer 1 as shown in Fig. 1. Then, 30 µm sealant film (15 µm LDPE layer + 15 µm adhesive layer; ZH-41, J-Film Corporation) was laminated on one surface by the dry lamination method to manufacture the sealant layer 2. The peel strength between the polystyrene-based resin sheet and the sealant film was 4 N/15 mm in width. Aqueous solution of surfactant (Electrostripper AC, Kao Corporation) diluted in the concentration of 30 % was applied using the roll coater to the surface of the base material layer 1 on the opposite side of the surface wherein the sealant layer 2 was laminated to manufacture the antistatic layer 3 on the sheet surface.

### Concrete example 2

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm, and styrene-butadiene copolymer (TR2003; styrene content of 40% by weight, butadiene content of 60% by weight, JSR Corporation) were blended in the proportion of 90/10% by weight, then extruded in a molten state to obtain the sheet of the base material layer 1. Then, 30 µm sealant film (15 µm LDPE layer + 15 µm adhesive layer; ZH-41, J-Film Corporation) was laminated on one surface by the dry lamination method to manufacture the sealant layer 2. Aqueous solution of surfactant (Electrostripper AC, Kao Corporation) diluted in the concentration of 30 % was applied using the roll coater to the surface of the base material layer 1 on the opposite side of the surface wherein the sealant layer 2 was laminated to manufacture the antistatic layer 3 on the sheet surface, and the resin sheet shown in Fig. 1 was obtained.

### Concrete example 3

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm, and styrene-butadiene copolymer (TR2003, JSR Corporation) were blended in the proportion of 90/10% by weight, then extruded in a molten state to obtain the sheet of the base material layer 1 as shown in Fig. 2. Then, 30 µm sealant film (15 µm LDPE layer + 15 µm adhesive layer; ZH-41, J-Film Corporation) was laminated on one surface by the dry lamination method to manufacture the sealant layer 2. On the surface of the base material layer 1 on the opposite side of the surface wherein the sealant layer 2 was laminated, 20 µm back printed polystyrene-based resin film was laminated by the dry lamination method to manufacture the printing layer 4. Aqueous solution of surfactant (Electrostripper AC, Kao Corporation) diluted in the concentration of 30 % was applied to the surface of the polystyrene-based resin film of this printing layer 4 using the gravure coater to manufacture the antistatic layer 3 on the sheet surface.

### Concrete example 4 (comparative example)

High impact polystyrene having a weight-average molecular weight of 220000, a rubber content of 8% by weight, a liquid paraffin content of 0.5% by weight, a swelling degree of the soft constituent particles of 11 and an average particle diameter of the soft constituent particles of 1.0 µm was extruded in a molten state to obtain the sheet of the base material layer 1. Other than that, the sheet shown in Fig. 1 was obtained in the same manner as concrete example 1.

### Concrete example 5 (comparative example)

High impact polystyrene having a weight-average molecular weight of 240000, a rubber content of 6.6% by weight, a liquid paraffin content of 2.5% by weight, a swelling degree of the soft constituent particles of 12 and an average particle diameter of the soft constituent particles of 3. 5 µm was extruded in a molten state to obtain the sheet of the base material layer 1 having a thickness of 150 µm. Other than that, the sheet shown in Fig. 1 was obtained in the same manner as concrete example 1.

### Concrete example 6

High impact polystyrene having a weight-average molecular weight of 250000, a rubber content of 9.7% by weight, a liquid paraffin content of 0% by weight, a swelling degree of the soft constituent particles of 12 and an average particle diameter of the soft constituent particles of 2.7 µm was extruded in a molten state to obtain the sheet of the base material layer 1. Other than that, the sheet shown in Fig. 1 was obtained in the same manner as concrete example 1.

### Concrete example 7

High impact polystyrene having a weight-average molecular weight of 160000, a rubber content of 14% by weight, a liquid paraffin content of 0% by weight, a swelling degree of the soft constituent particles of 12 and an average particle diameter of the soft constituent particles of 3.6 µm was extruded in a molten state to obtain the sheet of the base material layer 1. Other than that, the sheet shown in Fig. 1 was obtained in the same manner as concrete example 1.

### Concrete example 8

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm was extruded in a molten state to obtain the sheet of the base material layer 1. Then, 30 µm sealant film (15 µm LDPE layer + 15 µm adhesive layer; ZH-41, J-Film Corporation) was laminated on one surface to manufacture the sealant layer 2. Then, to the surface of the base material layer 1 on the opposite side of the surface wherein the sealant layer 2 was laminated, aqueous solution of water-based emulsion of polydimethylsiloxane (KM787; Shin-Etsu Chemical Co. , LTD) diluted in the concentration of 30 % was applied to the sheet surface using the gravure coater to manufacture the antistatic layer 3, and the sheet shown in Fig. 1 was obtained.

### Concrete example 9

High impact polystyrene having a weight-average molecular weight of 230000, a rubber content of 12% by weight, a liquid paraffin content of 1.0% by weight was extruded in a molten state to obtain the sheet of the base material layer 1. Then, 30 µm sealant film (15 µm LDPE layer + 15 µm adhesive layer; ZH-41, J-Film Corporation) was laminated on one surface to manufacture the sealant layer 2. Then, mixed solution of surfactant (Electrostripper AC, Kao Corporation) and polydimethylsiloxane (KM787; Shin-Etsu Chemical Co., LTD) was applied to the surface of the base material layer 1 on the opposite side of the surface wherein the sealant layer 2 was laminated to manufacture the antistatic layer 3, and the sheet shown in Fig. 1 was obtained.

### Concrete example 10

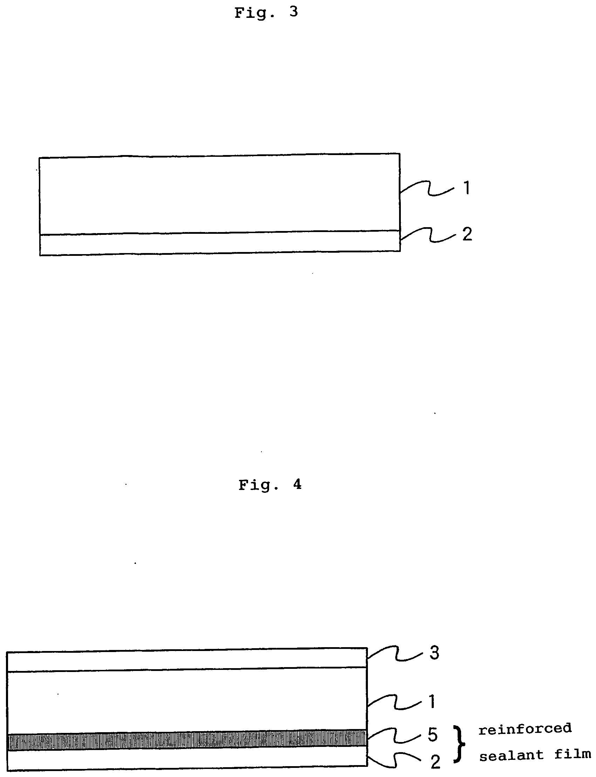

One part by weight of surfactant (Electrostripper AC, Kao Corporation) was added to the high impact polystyrene having a weight-average molecular weight of 230000, a rubber content of 12% by weight, a liquid paraffin content of 1.0% by weight, and it was extruded in a molten state to obtain the sheet of the base material layer 1. Then, 30 µm sealant film (15 µm LDPE layer + 15 µm adhesive layer; ZH-41, J-Film Corporation) was laminated on one surface to manufacture the sealant layer 2, and the sheet shown in Fig. 3 was obtained.

### Concrete example 11

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm, and styrene-butadiene copolymer (TR2003; styrene content of 40% by weight, butadiene content of 60% by weight, JSR Corporation) were blended in the proportion of 90/10% by weight, then extruded in a molten state to obtain the sheet of the base material layer 1. Then, 50 µm reinforced-sealant film (35 µm LLDPE + 15 µm sealant layer (adhesive layer)) was laminated on one surface, and aqueous solution of surfactant (Electrostripper AC, Kao Corporation) diluted in the concentration of 30 % was applied using the gravure coater to the surface of the base material layer 1 on the opposite side of the surface wherein the reinforced-sealant film was laminated to manufacture the antistatic layer 3, and the sheet shown in Fig. 4 was obtained.

### Concrete example 12

High impact polystyrene having a weight-average molecular weight of 230000, a rubber content of 12% by weight, a liquid paraffin content of 1.0% by weight, a swelling degree of the soft constituent particles of 12 and an average particle diameter of the soft constituent particles of 3.4 µm, and styrene-butadiene copolymer (TR2003; styrene content of 40% by weight, butadiene content of 60% by weight, JSR Corporation) were blended in the proportion of 90/10% by weight, then extruded in a molten state to obtain the sheet of the base material layer 1. Then, 65 µm reinforced-sealant film (50 µm LLDPE + 15 µm sealant layer (adhesive layer)) was laminated on one surface, and 30 µm back printed CPP (Cast Polypropylene) film 6 was laminated on the surface of the base material layer 1 on the opposite side of the surface wherein the reinforced-sealant film was laminated. Aqueous solution of surfactant (Electrostripper AC, Kao Corporation) diluted in the concentration of 30 % was applied to the surface of this CPP film 6 using the gravure coater to manufacture the antistatic layer 3, and the sheet shown in Fig. 5 was obtained.

### Reference Example

Aluminum foil having a thickness of 60 µm was used for the sheet for the cap.

### Example 2 (Manufacturing of the cap)

The caps wherein various sheets of concrete examples 1 to 10 were folded by the cold forming machine under the atmosphere of 23° C, were compressed with male dies into female dies to be pressed under the atmosphere of 23° C, and the cap 7 being cap shape shown in Fig. 6 was obtained. The clearance between the male die and the female die was made to be 0.3 mm, and the continuous forming was carried out. The flat part of the cap 7 was made to be 24.5 mm diameter and the length of the folded part (skirt S) was made to be 5 mm. Moreover, in the aluminum foil having a thickness of 60 µm of reference example, the clearance between the male die and the female die of the cold forming machine was made to be 1.0 mm. Other than that, the procedure was carried out in the same manner as the concrete examples.

### Example 3 (Manufacturing of the sealed container)

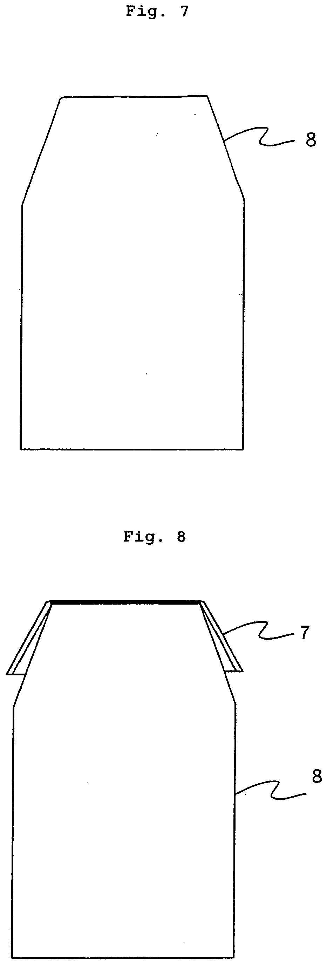

Container 8 shown in Fig. 7 was manufactured by the injection blow molding method. Flange bore of the container 8 was made to be 24.0 mm diameter, and capacity was made to be 65 cc. High impact polystyrene (H440X; Japan Polystyrene Inc.) was used for the resin. The container and the cap were welded under the condition of 20 kHz frequency, 100 µmpp amplitude and 0.5 second by the ultrasonic welding method, and the sealed container shown in Fig. 8 was obtained.

### Example 4 (Characteristic test)

Concerning the sheet obtained in example 1, the falling weight impact test was performed by the following method to measure the surface resistivity and the coefficient of surface static friction, and the performance and formability concerning the cap obtained in example 2 and the sealed container obtained in example 3 were assessed in 4 stages (⊚, ○, Δ, ×). The results are shown in Table 2.

### (1) Falling weight impact test

It conformed to ASTM D3763. For the measuring apparatus, GRAPHIC IMPACT TESTER made by Toyo Seiki Seisaku-sho, Ltd. was used, and the total energy - energy to maximum force and the deflection at maximum force were measured. Measuring was conducted using the weight having the holder of 45 mm diameter and the impact core of 13 mm diameter, and making the rate of fall of the impact core 5.0 M/sec, and at 5000 lb of force, 1 K unit of force amplifier range, 2 µ second of sampling time and 5 V of input sensitivity of loading.

### (2) Measurement of the surface resistivity

It conformed to JIS-K6911. For the measuring apparatus, digital extremely high resistances/ultra-low currents electrometer made by ADVANTEST CORPORATION was used.

### (3) Measurement of the coefficient of static friction

It conformed to JIS-K7125. For the measuring apparatus, the friction measuring equipment TR made by Toyo Seiki Seisaku-sho, Ltd. was used.

### (4) Cap strength at the time of forming

13000 shots were formed per hour using the cold forming machine. It was checked visually whether the formed caps had damages or not.

### (5) Continuous cold formability

13000 shots were formed per hour using the cold forming machine. It was checked whether the formed caps adhered to the die part.

### (6) Cap strength at the time of ultrasonic welding

Cold formed caps were welded to 65 cc container having the flange bore of 24.0 mm diameter by the ultrasonic welding method. It was checked visually whether the caps of the welded sealed container had damages (holes and breaks) or not.

### (7) Shape retaining property

Concerning the formed caps, the angle α formed between the flat part and the folded part was calculated, and it was determined as follows. Determination was conducted immediately after the forming and 2 hrs later. As the folding angle α, it was displayed as follows in the table, ○: 130°or less, Δ: exceeding 130° and 150° or less, X: exceeding 150°.

### (8) Sealing property

The cap of the welded sealed container was tapped with finger tips to check whether the cap adhered to the container or not.

### (9) Peeling property of the sealant layer

The cap of the sealed container was peeled with hand to check visually whether the sealant layer remains on the container or not.

### (10) Cap strength at the time of opening

When the cap of the sealed container was peeled with hand, it was checked whether the breaks (cracks of edge) occurred in the cap or not.

### (11) Cap strength at the time of falling

The sealed container was dropped naturally from the height of 100 cm to check whether the breaks occurred in the cap or not.

### (12) Peeling property between the cap and the container

The resin sheet for the cap and the sheet manufactured using the material for the container were welded by the ultrasonic welding method. Opening of both sheets was set at 180 degree, and the peel strength at 180° C was measured and determined. For the testing machine, Autograph AG-500B made by SHIMADZU CORPORATION was used, and the peeling speed was made to be 300 mm/min. It was displayed as follows in the table, ○: 6 to 20 N/15 mm in width, Δ: less than 6 N/15 mm in width, exceeding 20 N/15 mm in width.

### (13) Recycling efficiency

It was assessed whether separation of the cap and the container was necessary. It was displayed as follows in the table, ○:separation unnecessary, X:separation necessary.

### (14) Ability to detect metal

It was assessed whether it was possible to check using the metal detector. It was displayed as follows in the table, ○: check possible, X: check impossible.

| | Concrete examples | | | | | | | | | | | | Reference example |
|---|---|---|---|---|---|---|---|---|---|---|---|---|---|
| | 1 | 2 | 3 | 4 | 5 | 6 | 7 | 8 | 9 | 10 | 11 | 12 | |
| propagation energy (J) | 0.028 | 0.050 | 0.030 | 0.025 | 0.019 | 0.026 | 0.026 | 0.028 | 0.028 | 0.025 | | | - |
| surface resistivity (Ω) | 10⁸ | 10⁸ | 10⁸ | 10⁸ | 10⁸ | 10⁸ | 10⁸ | 10¹⁴ | 10¹² | 10¹¹ | 10⁸ | 10⁸ | - |
| coefficient of static friction | 0.38 | 0.40 | 0.46 | 0.39 | 0.48 | 0.38 | 0.38 | 0.25 | 0.35 | 0.38 | | | - |
| peeling strength between base material layer and sealant layer (N/15 mm) | 4 | 4 | 4 | - | - | - | - | - | - | - | 4 | 4 | - |
| displacement at the maximum load (mm) | 7.28 | 8.00 | 7.30 | 5.89 | 6.29 | 7.64 | 6.36 | 7.28 | 7.28 | 7.10 | | | |
| cap strength at the time of forming | ○ | ⊚ | ⊚ | Δ | Δ | ○ | ○ | ⊚ | ⊚ | ○ | ⊚ | ⊚ | ⊚ |
| continuous formability | ⊚ | ⊚ | ⊚ | ⊚ | ⊚ | ⊚ | ⊚ | ○ | ○ | Δ | ⊚ | ⊚ | ⊚ |
| cap strength at the time of ultrasonic | ○ | ○ | ○ | ○ | ○ | ○ | ○ | ○ | ○ | ○ | ⊚ | ⊚ | ⊚ |
| shape-retaining property immediately after forming | Δ | ○ | ○ | Δ | Δ | Δ | ○ | Δ | Δ | Δ | ○ | ○ | ○ |
| shape-retaining property 2 hours later | Δ | ○ | ○ | Δ | Δ | Δ | Δ | Δ | Δ | Δ | ○ | ○ | ○ |
| sealing property | ⊚ | ⊚ | ⊚ | ⊚ | ⊚ | ⊚ | ⊚ | Δ | Δ | ⊚ | ⊚ | ⊚ | ⊚ |
| peeling of sealant | ⊚ | ⊚ | ⊚ | ⊚ | ⊚ | ⊚ | ⊚ | ⊚ | ⊚ | ⊚ | ⊚ | ⊚ | ⊚ |
| cap strength at the time of opening | Δ | ○ | ○ | Δ | Δ | Δ | Δ | Δ | Δ | Δ | ⊚ | ○ | ⊚ |
| cap strength at the time of dropping | ⊚ | ⊚ | ⊚ | ⊚ | ⊚ | ⊚ | ⊚ | Δ | Δ | ⊚ | ⊚ | ⊚ | ⊚ |
| peeling strength of cap and container | ○ | ○ | ○ | ○ | ○ | ○ | ○ | Δ | Δ | ○ | ○ | ○ | ○ |
| recycling efficiency | ○ | ○ | ○ | ○ | ○ | ○ | ○ | ○ | ○ | ○ | ○ | ○ | × |
| can/cannot detect metal | ○ | ○ | ○ | ○ | ○ | ○ | ○ | ○ | ○ | ○ | ○ | ○ | × |
| comprehensive evaluation | Δ | ○ | ○ | Δ | Δ | Δ | Δ | Δ | Δ | Δ | ⊚ | ⊚ | Δ |

### Industrial Applicability

By using the resin sheet for cold forming of the present invention, the cold formed product that is fixed to the resin container and has the shape retaining property can be obtained, the heating apparatus becomes unnecessary, and downsize of the equipment can be planned and continuous forming at high speed is possible at the same time. Especially, using the high impact polystyrene-based resin sheet makes it possible to obtain the cold formed product which is excellent in the impact resistance property, and has the shape retaining property.

Moreover, by using the cap as the cold formed product obtained by cold forming from the resin sheet for cold forming of the present invention, and the sealed container to which the cap is applied, as the check by the metal detector can be conducted, it is possible to detect the foreign matter being mixed in the container before any trouble arises. It is possible to collect and dispose the cap and the resin container without separating. Even when the trouble arises in the filling apparatus filling the filled contents into the container, softening of the resin sheet which is fed into the processing area does not occur, discard of the resin sheets can be avoided, the cap can be peeled from the container with fingers and the peeling does not occur by natural drop.

## Claims

1. A resin sheet for cold forming that is used to manufacture a cold formed product that is fixed to a resin formed product, and is made of a base material layer containing a polystyrene-based resin or a base material layer containing a polystyrene-based resin on which a functional layer is laminated, wherein the polystyrene-based resin contains a high impact polystyrene (HIPS) or a composition consisting of a high impact polystyrene and styrene-butadiene copolymer, wherein the high impact polystyrene is obtained by polymerizing a styrene-based monomer in the presence of a rubber-like polymer, and has a matrix whose weight-average molecular weight is 150000 to 300000, a styrene content of 82 to 94% by weight, a rubber content of 9 to 15% by weight, and a liquid paraffin content of 0 to 2.0% by weight, wherein the high impact polystyrene has soft component particles that have a swelling degree of 30 or less and an average particle diameter in the range of 0.5 to 10 µm, and wherein the resin sheet possesses any one of the following properties (1) to (3).
(1) total energy - energy to maximum force in a sheet having a thickness of 150 µm measured by a falling weight impact test method conforming to ASTM D3763 is 0.015 J or more.
(2) a deflection at maximum force in a sheet having a thickness of 150 µm measured by a falling weight impact test method conforming to ASTM D3763 is 10 mm or less.
(3) total energy - energy to maximum force in a sheet having a thickness of 150 µm measured by the falling weight impact test method conforming to ASTM D3763 is 0.015 J or more, and a deflection at maximum force in a sheet having a thickness of 150 µm measured by the falling weight impact test method conforming to ASTM D3763 is 10 mm or less.

2. The resin sheet for cold forming according to any one of claims 1, wherein the styrene-butadiene copolymer is a styrene-butadiene copolymer (B) that has a styrene content of 30 to 90% by weight, and a butadiene content of 10 to 70% by weight.

3. The resin sheet for cold forming according to any one of claims 1 or 2, containing a composition consisting of 100 to 70% by weight of high impact polystyrene (A) and 0 to 30% by weight of styrene-butadiene copolymer (B).

4. The resin sheet for cold forming according to any one of claims 1 to 3, wherein one or more functional layer(s) is (are) laminated on both surfaces or either one of surfaces of the base material layer.

5. The resin sheet for cold forming according to any one of claims 1 to 4, wherein the functional layer is a sealant layer, said sealant layer preferably containing a thermoplastic elastomer and/or an ethylene-based copolymer.

6. The resin sheet for cold forming according to any one of claims 1 to 5, wherein the functional layer is an antistatic layer.

7. The resin sheet for cold forming according to any one of claims 1 to 6, wherein the functional layer is a printing layer.

8. The resin sheet for cold forming according to any one of claims 1 to 7, wherein the functional layer is a barrier layer.

9. The resin sheet for cold forming according to any one of claims 1 to 8, wherein the functional layer is a strength-reinforcing layer, said strength-reinforcing layer preferably being placed between the sealant layer and the base material layer.

10. The resin sheet for cold forming according to claim 9, wherein the strength-reinforcing layer contains polyolefin-based resin, the polyolefin-based resin preferably being LLDPE (Linear Low Density Polyethylene).

11. The resin sheet for cold forming according to any one of claims 1 to 10, wherein the functional layer is a wear-resistant layer formed as a superficial layer, preferably containing the polyolefin-based resin and/or nylon resin, said polyolefin-based resin preferably being CPP (Cast Polypropylene).

12. The resin sheet for cold forming according to any one of claims 1 to 11, wherein a surface resistivity value of at least one surface is in the range of 10⁶ to 10¹⁴ Ω.

13. The resin sheet for cold forming according to any one of claims 1 to 12, wherein a coefficient of surface static friction of at least one surface is in the range of 0.1 to 0.4.

14. The resin sheet for cold forming according to any one of claims 1 to 13, wherein the resin sheet for cold forming is white-colored.

15. The resin sheet for cold forming according to any one of claims 1 to 14, wherein the resin sheet for cold forming is a resin sheet having a thickness of 50 µm to 1 mm.

16. The resin sheet for cold forming according to any one of claims 1 to 15, wherein the peel strength between the resin formed product and the cold formed product is 6 to 20 N/15 mm in width in 180 degree peel test.

17. The resin sheet for cold forming according to claim 16, wherein an adhesive strength between the base material layer and the sealant layer or the strength-reinforcing layer is 3 N/15 mm in width or more.

18. A cold formed product that is fixed to a resin formed product and has a shape retaining property obtained by cold forming a resin sheet for cold forming at a temperature lower than a glass transition point of resin that constitutes the resin sheet, said resin sheet for cold forming being the resin sheet for cold forming according to any one of claims 1 to 17.

19. The cold formed product according to claim 18, wherein the cold formed product is a cap of a container.

20. A method for manufacturing a cold formed product having a shape retaining property, wherein a resin sheet for cold forming is cold formed at a temperature lower than a glass transition point of resin that constitutes the resin sheet, when manufacturing a formed product that is fixed to a resin formed product, said resin sheet for cold forming being the resin sheet for cold forming according to any one of claims 1 to 17.

21. The method for manufacturing a cold formed product according to claim 20, wherein cold forming is carried out by compressing the resin sheet for cold forming with a male die into a female die to press, the clearance between the male die and the female die preferably being adjusted to 1.3 to 4.0 times to a thickness of the resin sheet for cold forming.

22. The method for manufacturing a cold formed product according to claim 20 or 21, wherein the cold formed product is a cap of a container.

23. A sealed container comprising a resin container and a cap fixed to the resin container, wherein the cap is manufactured by cold forming the resin sheet for cold forming, and has the shape retaining property, said resin sheet for cold forming being the resin sheet for cold forming according to any one of claims 1 to 17.

24. A method for manufacturing a sealed container comprising: cold forming a resin sheet for cold forming at a temperature lower than a glass transition point of resin that constitutes the resin sheet to manufacture a cap having the shape retaining property; and fixing the cap and the resin container, said resin sheet for cold forming being the resin sheet for cold forming according to any one of claims 1 to 17.

25. The method for manufacturing a sealed container according to claim 24, wherein cold forming is carried out by compressing the resin sheet for cold forming with a male die into a female die to press, the clearance between the male die and the female die preferably being adjusted to 1.3 to 4.0 times to a thickness of the resin sheet for cold forming.

26. The method for manufacturing a sealed container according to claim 24 or 25, wherein the resin container and the cap are fixed by an ultrasonic welding method.

## Patentansprüche

1. Harzfolie zum Kaltformen, die zur Herstellung eines kaltgeformten Produktes verwendet wird, das an einem aus Harz geformten Produkt befestigt ist, und die aus einer Basismaterialschicht besteht, die ein polystyrolbasiertes Harz enthält, oder einer Basismaterialschicht, die ein polystyrolbasiertes Harz enthält, auf das eine Funktionsschicht laminiert ist, wobei das polystyrolbasierte Harz ein schlagfestes Polystyrol (HIPS) oder eine Zusammensetzung ist, die aus einem schlagfesten Polystyrol und einem Styrol-Butadien-Copolymer besteht, wobei das schlagfeste Polystyrol durch Polymerisieren eines styrolbasierten Monomers in Anwesenheit eines kautschukähnlichen Polymers erhalten wird und eine Matrix aufweist, deren gewichtsdurchschnittliches Molekulargewicht 150000 bis 300000 beträgt, einen Styrolgehalt von 82 bis 94 Gew.-%, einen Kautschukgehalt von 9 bis 15 Gew.-%, und einen Paraffinölgehalt von 0 bis 2,0 Gew.-%, wobei das schlagfeste Polystyrol Partikel einer weichen Komponente aufweist, die einen Schwellungsgrad von 30 oder weniger und einen durchschnittlichen Partikeldurchmesser im Bereich von 0,5 bis 10 µm aufweisen, und wobei die Harzfolie eine aus den folgenden Eigenschaften (1) bis (3) besitzt.
(1) Die Gesamtenergie - Energie bis zur maximalen Kraft in einer Folie mit einer Dicke von 150 µm, gemessen mit einem Fallgewicht-Schlagversuchverfahren gemäß ASTM D3763, beträgt 0,015 J oder mehr.
(2) Eine Durchbiegung bei einer maximalen Kraft in einer Folie mit einer Dicke von 150 µm, gemessen mit einem Fallgewicht-Schlagversuchverfahren gemäß ASTM D3763, beträgt 10 mm oder weniger.
(3) die Gesamtenergie - Energie bis zur maximalen Kraft in einer Folie mit einer Dicke von 150 µm, gemessen mit dem Fallgewicht-Schlagversuchverfahren gemäß ASTM D3763, beträgt 0,015 J oder mehr, und eine Durchbiegung bei einer maximalen Kraft in einer Folie mit einer Dicke von 150 µm, gemessen mit dem Fallgewicht-Schlagversuchverfahren gemäß ASTM D3763, beträgt 10 mm oder weniger.

2. Harzfolie zum Kaltformen nach einem der Ansprüche 1, wobei das Styrol-Butadien-Copolymer ein Styrol-Butadien-Copolymer (B) ist, das einen Styrolgehalt von 30 bis 90 Gew.-% und einen Butadiengehalt von 10 bis 70 Gew.-% aufweist.

3. Harzfolie zum Kaltformen nach einem der Ansprüche 1 oder 2, die eine Zusammensetzung enthält, die zu 100 bis 70 Gew.-% aus einem schlagfesten Polystyrol (A) und zu 0 bis 30 Gew.-% aus einem Styrol-Butadien-Copolymer (B) besteht.

4. Harzfolie zum Kaltformen nach einem der Ansprüche 1 bis 3, wobei eine oder mehrere Funktionsschicht(en) auf beide Flächen oder eine der Flächen der Basismaterialschicht laminiert ist (sind).

5. Harzfolie zum Kaltformen nach einem der Ansprüche 1 bis 4, wobei die Funktionsschicht eine Versiegelungsschicht ist, die Versiegelungsschicht vorzugsweise ein thermoplastisches Elastomer und/oder ein ethylenbasiertes Copolymer enthält.

6. Harzfolie zum Kaltformen nach einem der Ansprüche 1 bis 5, wobei die Funktionsschicht eine antistatische Schicht ist.

7. Harzfolie zum Kaltformen nach einem der Ansprüche 1 bis 6, wobei die Funktionsschicht eine Druckschicht ist.

8. Harzfolie zum Kaltformen nach einem der Ansprüche 1 bis 7, wobei die Funktionsschicht eine Sperrschicht ist.

9. Harzfolie zum Kaltformen nach einem der Ansprüche 1 bis 8, wobei Funktionsschicht eine Verstärkungsschicht ist und diese Verstärkungsschicht vorzugsweise zwischen der Versiegelungsschicht und der Basismaterialschicht angeordnet ist.

10. Harzfolie zum Kaltformen nach Anspruch 9, wobei die Verstärkungsschicht ein polyolefinbasiertes Harz enthält, wobei das polyolefinbasierte Harz vorzugsweise LLDPE (lineares Polyethylen niederer Dichte) ist.

11. Harzfolie zum Kaltformen nach einem der Ansprüche 1 bis 10, wobei die Funktionsschicht eine verschleißfeste Schicht ist, die als Oberflächenschicht ausgebildet ist, und vorzugsweise das polyolefinbasierte Harz und/oder Nylonharz enthält, wobei das polyolefinbasierte Harz vorzugsweise CPP ist (gegossenes Polypropylen).

12. Harzfolie zum Kaltformen nach einem der Ansprüche 1 bis 11, wobei ein Oberflächenwiderstandswert von mindestens einer Oberfläche im Bereich von 10⁶ bis 10¹⁴ Ω liegt.

13. Harzfolie zum Kaltformen nach einem der Ansprüche 1 bis 12, wobei ein Koeffizient der statischen Oberflächenreibung von mindestens einer Oberfläche im Bereich von 0,1 bis 0,4 liegt.

14. Harzfolie zum Kaltformen nach einem der Ansprüche 1 bis 13, wobei die Harzfolie zum Kaltformen weiß gefärbt ist.

15. Harzfolie zum Kaltformen nach einem der Ansprüche 1 bis 14, wobei die Harzfolie zum Kaltformen eine Harzfolie mit einer Dicke von 50 µm bis 1 mm ist.

16. Harzfolie zum Kaltformen nach einem der Ansprüche 1 bis 15, wobei die Schälfestigkeit zwischen dem aus Harz geformten Produkt und dem kaltgeformten Produkt 6 bis 20 N/15 mm in der Breite im 180 Grad Schälversuch beträgt.

17. Harzfolie zu Kaltformen nach Anspruch 16, wobei eine Haftfestigkeit zwischen der Basismaterialschicht und der Versiegelungsschicht oder der Verstärkungsschicht 3 N/15 mm in der Breite oder mehr beträgt.

18. Kaltgeformtes Produkt, das an einem aus Harz geformten Produkt befestigt ist und eine formerhaltende Eigenschaft aufweist, die durch Kaltformen einer Harzfolie zum Kaltformen bei einer niedrigeren Temperatur als einem Glasübergangspunkt des Harzes erhalten wird, aus dem die Harzfolie besteht, wobei die Harzfolie zum Kaltformen die Harzfolie zum Kaltformen nach einem der Ansprüche 1 bis 17 ist.

19. Kaltgeformtes Produkt nach Anspruch 18, wobei das kaltgeformte Produkt eine Kappe eines Behälters ist.

20. Herstellungsverfahren für ein kaltgeformtes Produkt mit einer formerhaltenden Eigenschaft, wobei eine Harzfolie zum Kaltformen bei der Herstellung eines Formproduktes, das an einem aus Harz geformten Produkt befestigt ist, bei einer niedrigeren Temperatur als einem Glasübergangspunkt des Harzes kaltgeformt wird, aus dem die Harzfolie besteht, wobei die Harzfolie zum Kaltformen die Harzfolie zum Kaltformen nach einem der Ansprüche 1 bis 17 ist.

21. Herstellungsverfahren für ein kaltgeformtes Produkt nach Anspruch 20, wobei das Kaltformen durch Pressen der Harzfolie zum Kaltformen mit einer Patrize in eine Matrize zum Pressen ausgeführt wird, der Abstand zwischen der Patrize und der Matratze vorzugsweise auf 1,3 bis 4,0 mal einer Dicke der Harzfolie zum Kaltformen eingestellt wird.

22. Herstellungsverfahren für ein kaltgeformtes Produkt nach Anspruch 20 oder 21, wobei das kaltgeformte Produkt eine Kappe eines Behälters ist.

23. Versiegelter Behälter, umfassend einen Kunstharzbehälter und eine Kappe, die an dem Kunstharzbehälter befestigt ist, wobei die Kappe durch Kaltformen der Harzfolie zum Kaltformen hergestellt wird und die formerhaltende Eigenschaft aufweist, wobei die Harzfolie zum Kaltformen die Harzfolie zum Kaltformen nach einem der Ansprüche 1 bis 17 ist.

24. Herstellungsverfahren für einen versiegelten Behälter, umfassend: Kaltformen einer Harzfolie zum Kaltformen bei einer niedrigeren Temperatur als einem Glasübergangspunkt des Harzes, aus dem die Harzfolie besteht, um eine Kappe mit der formerhaltenden Eigenschaft herzustellen; und Fixieren der Kappe an dem Kunstharzbehälter, wobei die Harzfolie zum Kaltformen die Harzfolie zum Kaltformen nach einem der Ansprüche 1 bis 17 ist.

25. Herstellungsverfahren für einen versiegelten Behälter nach Anspruch 24, wobei das Kaltformen durch Pressen der Harzfolie zum Kaltformen mit einer Patrize in eine Matrize zum Pressen ausgeführt wird, der Abstand zwischen der Patrize und der Matratze vorzugsweise auf 1,3 bis 4,0 mal einer Dicke der Harzfolie zum Kaltformen eingestellt wird.

26. Herstellungsverfahren für einen versiegelten Behälter nach Anspruch 24 oder 25, wobei der Kunstharzbehälter und die Kappe durch ein Ultraschallschweißverfahren fixiert werden.

## Revendications

1. Feuille de résine pour formage à froid qui est utilisée pour fabriquer un produit formé à froid qui est fixé à un produit formé de résine, et est constituée d'une couche de matériau de base contenant une résine à base de polystyrène ou d'une couche de matériau de base contenant une résine à base de polystyrène sur laquelle est stratifiée une couche fonctionnelle, dans laquelle la résine à base de polystyrène contient un polystyrène à haute résistance aux chocs (HIPS) ou une composition constituée d'un polystyrène à haute résistance aux chocs et d'un copolymère de styrène-butadiène, dans laquelle le polystyrène à haute résistance aux chocs est obtenu par polymérisation d'un monomère à base de styrène en présence d'un polymère de type caoutchouc, et a une matrice dont la masse moléculaire moyenne en poids est de 150 000 à 300 000, une teneur en styrène de 82 à 94 % en poids, une teneur en caoutchouc de 9 à 15 % en poids, et une teneur en paraffine liquide de 0 à 2,0 % en poids, dans laquelle le polystyrène à haute résistance aux chocs a des particules constituantes molles qui ont un degré de gonflement de 30 ou moins et un diamètre moyen de particule compris entre 0,5 et 10 µm, et dans laquelle la feuille de résine possède l'une quelconque des propriétés suivantes (1) à (3)
(1) énergie totale - énergie à la force maximale dans une feuille ayant une épaisseur de 150 µm mesurée par une méthode de test de résistance aux chocs à masse tombante conforme à la norme ASTM D3763 est de 0,015 J ou plus,
(2) une déflexion à la force maximale dans une feuille ayant une épaisseur de 150 µm mesurée par une méthode de test de résistance aux chocs à masse tombante conforme à la norme ASTM D3763 est de 10 mm ou moins,
(3) énergie totale - énergie à la force maximale dans une feuille ayant une épaisseur de 150 µm mesurée par la méthode de test de résistance aux chocs à masse tombante conforme à la norme ASTM D3763 est de 0,015 J ou plus, et une déflexion à la force maximale dans une feuille ayant une épaisseur de 150 µm mesurée par la méthode de test de résistance aux chocs à masse tombante conforme à la norme ASTM D3763 est de 10 mm ou moins.

2. Feuille de résine pour formage à froid selon la revendication 1, dans laquelle le copolymère de styrène-butadiène est un copolymère de styrène-butadiène (B) ayant une teneur en styrène de 30 à 90 % en poids, et une teneur en butadiène de 10 à 70 % en poids.

3. Feuille de résine pour formage à froid selon l'une quelconque des revendications 1 ou 2, contenant une composition constituée de 100 à 70 % en poids de polystyrène à haute résistance aux chocs (A) et de 0 à 30% en poids d'un copolymère de styrène-butadiène (B).

4. Feuille de résine pour formage à froid selon l'une quelconque des revendications 1 à 3, dans laquelle une ou plusieurs couche(s) fonctionnelle(s) est (sont) stratifiée(s) sur les deux surfaces ou l'une des surfaces de la couche de matériau de base.

5. Feuille de résine pour formage à froid selon l'une quelconque des revendications 1 à 4, dans laquelle la couche fonctionnelle est une couche d'étanchéité, ladite couche d'étanchéité contenant de préférence un élastomère thermoplastique et/ou un copolymère à base d'éthylène.

6. Feuille de résine pour formage à froid selon l'une quelconque des revendications 1 à 5, dans laquelle la couche fonctionnelle est une couche antistatique.

7. Feuille de résine pour formage à froid selon l'une quelconque des revendications 1 à 6, dans laquelle la couche fonctionnelle est une couche d'impression.

8. Feuille de résine pour formage à froid selon l'une quelconque des revendications 1 à 7, dans laquelle la couche fonctionnelle est une couche barrière.

9. Feuille de résine pour formage à froid selon l'une quelconque des revendications 1 à 8, dans laquelle la couche fonctionnelle est une couche de renforcement de résistance, ladite couche de renforcement de résistance étant de préférence placée entre la couche d'étanchéité et la couche de matériau de base.

10. Feuille de résine pour formage à froid selon la revendication 9, dans laquelle la couche de renforcement de résistance contient une résine à base de polyoléfine, la résine à base de polyoléfine étant de préférence du LLDPE (Polyéthylène Linéaire Faible Densité).

11. Feuille de résine pour formage à froid selon l'une quelconque des revendications 1 à 10, dans laquelle la couche fonctionnelle est une couche résistante à l'usure formée sous forme d'une couche superficielle, contenant de préférence la résine à base de polyoléfine et/ou la résine de nylon, ladite résine à base de polyoléfine étant de préférence du CPP (Polypropylène Non-orienté).

12. Feuille de résine pour formage à froid selon l'une quelconque des revendications 1 à 11, dans laquelle une valeur de résistivité superficielle d'au moins une surface est dans la plage de 10⁶ à 10¹⁴ Ω.

13. Feuille de résine pour formage à froid selon l'une quelconque des revendications 1 à 12, dans laquelle un coefficient de frottement statique superficiel d'au moins une surface est dans la plage de 0,1 à 0,4.

14. Feuille de résine pour formage à froid selon l'une quelconque des revendications 1 à 13, dans laquelle la feuille de résine pour formage à froid est de couleur blanche.

15. Feuille de résine pour formage à froid selon l'une quelconque des revendications 1 à 14, dans laquelle la feuille de résine pour formage à froid est une feuille de résine ayant une épaisseur de 50 µm à 1 mm.

16. Feuille de résine pour formage à froid selon l'une quelconque des revendications 1 à 15, dans laquelle la résistance au pelage entre le produit formé de résine et le produit formé à froid est de 6 à 20 N/15 mm de largeur lors d'un test de pelage à 180 degrés.

17. Feuille de résine pour formage à froid selon la revendication 16, dans laquelle une force d'adhérence entre la couche de matériau de base et la couche d'étanchéité ou la couche de renforcement de résistance est de 3 N/15 mm de largeur ou plus.

18. Produit formé à froid qui est fixé à un produit formé de résine et a une propriété de conservation de forme obtenue en formant à froid une feuille de résine pour formage à froid à une température inférieure à un point de transition vitreuse de la résine qui constitue la feuille de résine, ladite résine pour formage à froid étant la feuille de résine pour formage à froid selon l'une quelconque des revendications 1 à 17.

19. Produit formé à froid selon la revendication 18, dans lequel le produit formé à froid est un bouchon d'un récipient.

20. Méthode de fabrication d'un produit formé à froid ayant une propriété de conservation de forme, dans laquelle une feuille de résine pour formage à froid est formée à froid à une température inférieure à un point de transition vitreuse de la résine qui constitue la feuille de résine, lors de la fabrication d'un produit formé qui est fixé à un produit formé de résine, ladite feuille de résine pour formage à froid étant la feuille de résine pour formage à froid selon l'une quelconque des revendications 1 à 17.

21. Méthode de fabrication d'un produit formé à froid selon la revendication 20, dans laquelle le formage à froid est réalisé en comprimant la feuille de résine pour formage à froid à l'aide d'une une matrice mâle dans une matrice femelle pour presser, le jeu entre la matrice mâle et la matrice femelle étant de préférence ajusté entre 1,3 et 4,0 fois une épaisseur de la feuille de résine pour formage à froid.

22. Méthode de fabrication d'un produit formé à froid selon la revendication 20 ou 21, dans laquelle le produit formé à froid est un bouchon d'un récipient.

23. Récipient étanche comprenant un récipient en résine et un bouchon fixé au récipient de résine, le bouchon étant fabriqué en formant à froid la feuille de résine pour formage à froid, et ayant la propriété de conservation de forme, ladite feuille de résine pour formage à froid étant la feuille de résine pour formage à froid selon l'une quelconque des revendications 1 à 17.

24. Méthode de fabrication d'un récipient étanche comprenant : la formation à froid d'une feuille de résine pour formage à froid à une température inférieure à un point de transition vitreuse de la résine qui constitue la feuille de résine pour fabriquer un bouchon ayant la propriété de conservation de forme ; et la fixation du bouchon et du récipient de résine, ladite feuille de résine pour formage à froid étant la feuille de résine pour formage à froid selon l'une quelconque des revendications 1 à 17.

25. Méthode de fabrication d'un récipient étanche selon la revendication 24, dans laquelle un formage à froid est effectué en comprimant la feuille de résine pour formage à froid à l'aide d'une matrice mâle dans une matrice femelle pour presser, le jeu entre la matrice mâle et la matrice femelle étant de préférence ajusté entre 1,3 et 4,0 fois une épaisseur de la feuille de résine pour formage à froid.

26. Méthode de fabrication d'un récipient étanche selon la revendication 24 ou 25, dans laquelle le récipient de résine et le bouchon sont fixés par une méthode de soudage à ultrasons.
